# EUROPEAN PATENT APPLICATION

(11) **EP 4 697 259 A1**
(43) Date of publication of application: **18.02.2026**
(21) Application number: 24866907.9
(22) Date of filing: 30.05.2024
(51) Int. Cl.: G06T 5/00

(54) **IMAGE EDITING METHOD AND ELECTRONIC DEVICE**

(30) Priority: 22.09.2023 CN 202311240819
(71) Applicant: Huawei Technologies Co., Ltd., Shenzhen, Guangdong 518129 (CN)
(72) Inventor: BIAN, Sucheng, Shenzhen, Guangdong 518129 (CN); YUE, Bo, Shenzhen, Guangdong 518129 (CN); HU, Debiao, Shenzhen, Guangdong 518129 (CN); ZHANG, Shengyu, Shenzhen, Guangdong 518129 (CN); FU, Jiahui, Shenzhen, Guangdong 518129 (CN); CHEN, Shaojun, Shenzhen, Guangdong 518129 (CN)
(74) Representative: Goddar, Heinz J.
(86) International application number: PCT/CN2024/096409
(87) International publication number: WO 2025/060486

(57) **Abstract**

This application discloses a picture editing method and an electronic device. The method includes: An electronic device displays a first picture, where the picture includes a first object; the electronic device splits the first object away from the first picture; the electronic device displays an editing menu of the first object based on information about the first object; and the electronic device edits the first object in response to an operation on the editing menu. In other words, the electronic device may split an object away from a picture, and the electronic device recommends an editing menu of the object based on information about the object. When a user operates the editing menu, the electronic device edits the first object based on a function in the editing menu. In this way, the electronic device can edit the object by splitting the object away from the picture, so that each object in the picture can be separately edited. Then, the electronic device recommends the editing menu of the object based on the information about the object, so that personalized editing can be performed on each object, to satisfy a personalized requirement for each object, and implement high practicability.

## Description

This application claims priority to Chinese Patent Application No. 202311240819.0, filed with the China National Intellectual Property Administration on September 22, 2023 and entitled "PICTURE EDITING METHOD AND ELECTRONIC DEVICE", which is incorporated herein by reference in its entirety.

### TECHNICAL FIELD

Embodiments of this application relate to the field of image processing technologies, and in particular, to a picture editing method and an electronic device.

### BACKGROUND

In daily life, a user may take a photo (or referred to as a picture) and share the photo by using an electronic device. To make the photo on the electronic device have better effect, the user may use picture retouching software to edit the photo, for example, erase a passerby or an obstacle in the photo, or beautify a face of a person in the photo.

Existing picture retouching software provides many picture retouching functions, such as a one-tap beautification function. Fixed editing parameters are preset for all these functions. In this way, when the electronic device uses the picture retouching software to edit a picture, the picture retouching software may beautify the to-be-edited picture to some extent based on preset parameter values of different picture retouching functions. In addition, when editing a picture by using the picture retouching software, the user may save various parameters of the picture as a template, and when another user edits a picture, the template may be applied to the to-be-edited picture of the another user.

However, when the electronic device uses the picture retouching software to edit the picture, the fixed parameters are used, and the picture is adjusted as a whole. Consequently, pictures generated in an existing picture editing manner have sameness, and a personalized requirement of the user on picture editing cannot be satisfied.

### SUMMARY

According to a picture editing method and an electronic device provided in this application, personalized picture retouching is implemented, and a personalized requirement of a user on picture editing can be satisfied.

To achieve the foregoing objective, the following technical solutions are used in this application.

According to a first aspect, this application provides a picture editing method. The method may be performed by an electronic device or a component (for example, a chip, a chip system, or a processor) located in the electronic device. The following provides descriptions by using an example in which the method is performed by the electronic device. The method may include: The electronic device displays a first picture, where the first picture includes a first object. The electronic device displays an editing menu of the first object based on information about the first object, and the electronic device edits the first object in response to an operation on the editing menu.

The information about the first object may include attribute information of the first object, feature information of the first object, and a primary/secondary attribute of the first object in the first picture. The attribute information may include an object type. For example, the object type may include types such as an animal, a person, a plant, a building, or a decoration. The feature information may include a shape, a size, a color, a proportion in a picture, and the like. This is not specifically limited in this application.

The primary/secondary attribute of the first object in the first picture may be preset, or may be determined based on other information of the first object, for example, one or more of the attribute information, the feature information, and basic information.

In this way, the electronic device recommends an editing menu of an object in a picture based on information about the object. When a user operates the editing menu, the electronic device edits the first object based on a function in the editing menu. In this way, the electronic device can separately edit each object in the picture, so that personalized editing can be performed on each object, to satisfy a personalized requirement for each object, and implement high practicability.

In some design solutions, before the editing menu of the first object is displayed, the picture editing method provided in this application further includes: The electronic device determines the editing menu of the first object based on the information about the first object, each information priority, and a correspondence between information and an editing function item, where the editing menu includes at least one editing function item.

In this way, the electronic device specifically recommends an editing menu of an object in the picture based on information about the object, so that each object corresponds to a separate editing menu. When the user operates the editing menu, the electronic device edits the first object based on the function in the editing menu. In this way, the electronic device can separately edit each object in the picture, so that personalized editing can be performed on each object, to satisfy the personalized requirement for each object, and implement high practicability.

In some design solutions, before the editing menu of the first object is displayed, the picture editing method provided in this application further includes: The electronic device determines the editing menu of the first object based on the information about the first object and historical behavior information of the user.

In this way, the electronic device specifically recommends the editing menu of the object with reference to the historical behavior information of the user and the information about the object, and may recommend an editing menu with reference to a preference of the user. When the user operates the editing menu, the electronic device edits the first object based on the function in the editing menu, so that preferences and aesthetics of different users can be satisfied, convenience is provided for the user to edit the object, and user experience is improved.

In a design solution, that the electronic device displays the editing menu of the first object based on the information about the first object is specifically: The electronic device displays the editing menu of the first object in response to receiving an operation on the first object.

In a design solution, the method further includes: The electronic device displays the first object through marking in response to receiving the operation on the first object. A representation of the displaying through marking may include: displaying by using dotted lines, displaying in red, displaying through lightening, displaying through blurring, and the like. Certainly, the displaying through highlighting is not limited to the foregoing examples. In this way, the electronic device displays the object in the picture through highlighting, so that the user can select the object and edit the object, to provide convenience for the user to edit the object subsequently.

In a design solution, the editing menu of the first object includes at least one of the following: deletion, beautification, background modification, and AI retouching.

In some design solutions, the first picture further includes a second object. Before the electronic device displays the editing menu of the first object based on the information about the first object, the picture editing method provided in this application further includes: The electronic device determines, based on the information about the first object and information about the second object, that the first object is a primary object in the first picture and the second object is a secondary object in the first picture, or that both the first object and the second object are primary objects in the first picture.

In some design solutions, the picture editing method provided in this application further includes: When both the first object and the second object are primary objects in the first picture, the electronic device displays the editing menu of the first object and first prompt information of the second object, where the first prompt information is used to prompt the user whether to edit the second object. In this way, the electronic device may determine primary and secondary attributes of objects in the picture and obtain primary objects and secondary objects through screening. Then, the electronic device may uniformly recommend an editing menu for the primary objects, or may separately recommend editing menus for the primary objects, or may recommend a menu for one primary object, and display prompt information used to prompt the user whether to edit another primary object. The electronic device may recommend an editing menu of deletion for the secondary object. In this way, the electronic device may selectively recommend a menu, so that an image editing operation has a primary/secondary attribute, and the image editing operation is simpler.

In some design solutions, the picture editing method provided in this application further includes: When the second object is a secondary object in the first picture, an editing menu of the second object includes deletion.

In a design solution, the editing menu of the first object includes the AI retouching, and that the electronic device edits the first object in response to a second operation on the editing menu is specifically: The electronic device displays a first input box in response to an operation on the AI retouching, where the first input box is an input box of editing content of the first object; the electronic device receives the editing content that is of the first object and that is entered by the user in the first input box; and the electronic device edits the first object based on the editing content. A format of the editing content may be a text format or an audio format. This is not specifically limited in this application. In this way, the electronic device can implement automatic picture retouching through AI retouching, to simplify a picture retouching operation, and make picture retouching more convenient and quicker.

In a design solution, that the electronic device edits the first object based on the editing content may be specifically: The electronic device reports the editing content and the information about the first object to another device, where the another device edits the first object based on the editing content, and returns edited object information; and the electronic device displays an edited first object based on the edited object information. The another device may include a server, a cloud platform, or the like. In this way, the electronic device reports the editing content and the information about the first object to the another device, and the another device edits the first object, to reduce a calculation amount of the electronic device and save resources of the electronic device.

In a design solution, that the electronic device displays the edited first object based on the edited object information may be specifically: The electronic device displays the edited first object in a preset display mode based on the edited object information. The preset display mode may include gradient displaying, progressive displaying, flip displaying, blinking displaying, and the like, and needs to be set based on an actual requirement during specific implementation. In this way, the electronic device displays the edited first object in the preset display mode, so that dynamic picture retouching effect can be implemented, and the user can feel a change before and after the picture retouching. This improves visual experience of the user.

In some design solutions, before the electronic device displays the editing menu of the first object based on the information about the first object, the picture editing method provided in this application further includes: The electronic device splits the first object away from the first picture. In this way, the electronic device may split the object away from the picture. The electronic device recommends the editing menu of the object based on the information about the object. When the user operates the editing menu, the electronic device edits the first object based on the function in the editing menu. In this way, the electronic device can edit the object by splitting the object away from the picture, so that each object in the picture can be separately edited. Then, the electronic device recommends the editing menu of the object based on the information about the object, so that personalized editing can be performed on each object, to satisfy the personalized requirement for each object, and implement high practicability.

In a design solution, that the electronic device splits the first object away from the first picture may be specifically: The electronic device splits the first object away from the first picture based on association of an image feature of the first object in the first picture.

In a design solution, that the electronic device splits the first object away from the first picture may be specifically: The electronic device splits the first object away from the first picture in response to an operation on the first object.

According to a second aspect, this application provides an electronic device. The electronic device includes a display module and an editing module. The display module is configured to display a first picture, where the first picture includes a first object. The display module is configured to display an editing menu of the first object based on information about the first object. The editing module is configured to edit the first object in response to a second operation on the editing menu.

The information about the first object may include attribute information of the first object, feature information of the first object, and a primary/secondary attribute of the first object in the first picture. The attribute information may include an object type. For example, the object type may include types such as an animal, a person, a plant, a building, or a decoration. The feature information may include a shape, a size, a color, a proportion in a picture, and the like. This is not specifically limited in this application.

The primary/secondary attribute of the first object in the first picture may be preset, or may be determined based on other information of the first object, for example, one or more of the attribute information, the feature information, and basic information.

In this way, the electronic device recommends an editing menu of an object in a picture based on information about the object. When the user operates the editing menu, the electronic device edits the first object based on the function in the editing menu. In this way, the electronic device can separately edit each object in the picture, so that personalized editing can be performed on each object, to satisfy the personalized requirement for each object, and implement high practicability.

In some design solutions, the electronic device further includes a determining module. The determining module is configured to determine the editing menu of the first object based on the information about the first object, each information priority, and a correspondence between information and an editing function item, where the editing menu includes at least one editing function item.

In this way, the electronic device specifically recommends an editing menu of an object in the picture based on information about the object, so that each object corresponds to a separate editing menu. When the user operates the editing menu, the electronic device edits the first object based on the function in the editing menu. In this way, the electronic device can separately edit each object in the picture, so that personalized editing can be performed on each object, to satisfy the personalized requirement for each object, and implement high practicability.

In a design solution, the determining module is configured to determine the editing menu of the first object based on the information about the first object and historical behavior information of a user.

In this way, the electronic device specifically recommends the editing menu of the object with reference to the historical behavior information of the user and the information about the object, and may recommend an editing menu with reference to a preference of the user. When the user operates the editing menu, the electronic device edits the first object based on the function in the editing menu, so that preferences and aesthetics of different users can be satisfied, convenience is provided for the user to edit the object, and user experience is improved.

In a design solution, the display module is configured to display the editing menu of the first object in response to receiving an operation on the first object.

In a design solution, the display module is configured to display the first object through marking in response to receiving the operation on the first object. A representation of the displaying through highlighting may include: displaying by using dotted lines, displaying in red, displaying through lightening, displaying through blurring, and the like. Certainly, the displaying through highlighting is not limited to the foregoing examples. In this way, the electronic device displays the object in the picture through highlighting, so that the user can select the object and edit the object, to provide convenience for the user to edit the object subsequently.

In a design solution, the editing menu of the first object includes at least one of the following: deletion, beautification, background modification, and AI retouching.

In a design solution, the first picture further includes a second object, and the determining module is configured to determine, based on the information about the first object and information about the second object, that the first object is a primary object in the first picture and the second object is a secondary object in the first picture, or that both the first object and the second object are primary objects in the first picture.

In a design solution, the display module is configured to: when both the first object and the second object are primary objects in the first picture, display the editing menu of the first object and first prompt information of the second object, where the first prompt information is used to prompt the user whether to edit the second object. In this way, the electronic device may determine primary and secondary attributes of objects in the picture and obtain primary objects and secondary objects through screening. Then, the electronic device may uniformly recommend an editing menu for the primary objects, or may separately recommend editing menus for the primary objects, or may recommend a menu for one primary object, and display prompt information used to prompt the user whether to edit another primary object. The electronic device may recommend an editing menu of deletion for the secondary object. In this way, the electronic device may selectively recommend a menu, so that an image editing operation has a primary/secondary attribute, and the image editing operation is simpler.

In a design solution, the display module is configured to: when the second object is a secondary object in the first picture, an editing menu of the second object includes deletion.

In a design solution, the editing menu of the first object includes the AI retouching, and the editing module is configured to: display a first input box in response to an operation on the AI retouching, where the first input box is an input box of editing content of the first object; receive the editing content that is of the first object and that is entered by the user in the first input box; and edit the first object based on the editing content. A format of the editing content may be a text format or an audio format. This is not specifically limited in this application. In this way, the electronic device can implement automatic picture retouching through AI retouching, to simplify a picture retouching operation, and make picture retouching more convenient and quicker.

In a design solution, the editing module is configured to: report the editing content and the information about the first object to another device, where the another device edits the first object based on the editing content, and returns edited object information; and display an edited first object based on the edited object information. In this way, the electronic device reports the editing content and the information about the first object to the another device, and the another device edits the first object, to reduce a calculation amount of the electronic device and save resources of the electronic device.

In a design solution, the display module is configured to display the edited first object in a preset display mode based on the edited object information. The preset display mode may include gradient displaying, progressive displaying, flip displaying, blinking displaying, and the like, and needs to be set based on an actual requirement during specific implementation. In this way, the electronic device displays the edited first object in the preset display mode, so that dynamic picture retouching effect can be implemented, and the user can feel a change before and after the picture retouching. This improves visual experience of the user.

In some design solutions, the electronic device further includes a splitting module, where the splitting module is configured to split the first object away from the first picture. In this way, the electronic device may split the object away from the picture. The electronic device recommends the editing menu of the object based on the information about the object. When the user operates the editing menu, the electronic device edits the first object based on the function in the editing menu. In this way, the electronic device can edit the object by splitting the object away from the picture, so that each object in the picture can be separately edited. Then, the electronic device recommends the editing menu of the object based on the information about the object, so that personalized editing can be performed on each object, to satisfy the personalized requirement for each object, and implement high practicability.

In a design solution, the splitting module is configured to split the first object away from the first picture based on association of an image feature of the first object in the first picture.

In a design solution, the splitting module is configured to split the first object away from the first picture in response to an operation on the first object.

According to a third aspect, this application provides an electronic device. The electronic device includes one or more processors and a memory, the memory stores code, and when the code is executed by the processor, the electronic device is enabled to perform the method according to the first aspect.

According to a fourth aspect, this application provides a computer-readable storage medium, including computer instructions. When the computer instructions are run on an electronic device, the electronic device is enabled to perform the method according to the first aspect.

For specific implementations and corresponding technical effect of the second aspect to the fourth aspect, refer to the specific implementations and technical effects of the first aspect.

### BRIEF DESCRIPTION OF DRAWINGS

FIG. 1 is a diagram of a structure of an electronic device according to an embodiment of this application;
FIG. 2 is a diagram of a software architecture of an electronic device according to an embodiment of this application;
FIG. 3 is a diagram of a software architecture of an electronic device according to an embodiment of this application;
FIG. 4 is a schematic flowchart of a picture editing method according to an embodiment of this application;
FIG. 5 is a diagram of a gallery interface in an application scenario of a picture editing method according to an embodiment of this application;
FIG. 6 is a diagram of a gallery interface in an application scenario of a picture editing method according to an embodiment of this application;
FIG. 7 is a diagram of a gallery interface in an application scenario of a picture editing method according to an embodiment of this application;
FIG. 8 is a diagram of a gallery interface in an application scenario of a picture editing method according to an embodiment of this application;
FIG. 9 is a diagram of a gallery interface in an application scenario of a picture editing method according to an embodiment of this application;
FIG. 10 is a diagram of a gallery interface in an application scenario of a picture editing method according to an embodiment of this application;
FIG. 11 is a diagram of a gallery interface in an application scenario of a picture editing method according to an embodiment of this application;
FIG. 12-1 is a diagram of a gallery interface in an application scenario of a picture editing method according to an embodiment of this application;
FIG. 12-2 is a diagram of a gallery interface in an application scenario of a picture editing method according to an embodiment of this application;
FIG. 13 is a diagram of a gallery interface in an application scenario of a picture editing method according to an embodiment of this application;
FIG. 14 is a diagram of a gallery interface in an application scenario of a picture editing method according to an embodiment of this application;
FIG. 15 is a diagram of a gallery interface in an application scenario of a picture editing method according to an embodiment of this application;
FIG. 16 is a diagram of a gallery interface in an application scenario of a picture editing method according to an embodiment of this application;
FIG. 17 is a diagram of a gallery interface in an application scenario of a picture editing method according to an embodiment of this application;
FIG. 18 is a diagram of a gallery interface in an application scenario of a picture editing method according to an embodiment of this application;
FIG. 19 is a diagram of a gallery interface in an application scenario of a picture editing method according to an embodiment of this application;
FIG. 20 is a diagram of a gallery interface in an application scenario of a picture editing method according to an embodiment of this application;
FIG. 21 is a diagram of a gallery interface in an application scenario of a picture editing method according to an embodiment of this application;
FIG. 22 is a diagram of a gallery interface in an application scenario of a picture editing method according to an embodiment of this application;
FIG. 23 is a diagram of a gallery interface in an application scenario of a picture editing method according to an embodiment of this application;
FIG. 24 is a diagram of a gallery interface in an application scenario of a picture editing method according to an embodiment of this application;
FIG. 25 is a diagram of a gallery interface in an application scenario of a picture editing method according to an embodiment of this application; and
FIG. 26 is a diagram of a structure of an electronic device according to an embodiment of this application.

### DESCRIPTION OF EMBODIMENTS

To make a picture on an electronic device have better effect, picture retouching software may be installed on the electronic device. A user may use the picture retouching software to edit a photo, for example, erase a passerby or an obstacle in the photo, or beautify a face of a person in the photo. Specifically, the picture retouching software provides many picture retouching functions, such as a one-tap beautification function. Fixed editing parameters are preset for all these functions. In this way, when the electronic device uses the picture retouching software to edit a picture, the picture retouching software may beautify the to-be-edited picture to some extent based on preset parameter values of different picture retouching functions. In addition, when editing a picture by using the picture retouching software, the user may save various parameters of the picture as a template, and when another user edits a picture, the template may be applied to the to-be-edited picture of the another user. However, the picture retouching software adjusts the picture as a whole by using the fixed editing parameters or the template. Consequently, edited pictures have sameness, and a personalized requirement of the user on picture editing cannot be satisfied.

To resolve the foregoing problem, an embodiment of this application provides a picture editing method. The method is applied to an electronic device, and a first application is installed on the electronic device. The electronic device receives an operation on a first interface of the first application, and displays a first picture, where the first picture includes a first object. The electronic device splits the first object away from the first picture. The electronic device displays an editing menu of the first object based on first information of the first object. In response to an operation on the editing menu, the electronic device edits the first object based on a function in the editing menu. In other words, the electronic device may split an object away from a picture, and the electronic device recommends an editing menu of the object based on information about the object. When a user operates the editing menu, the electronic device edits the first object based on a function in the editing menu. In this way, the electronic device can edit the object by splitting the object away from the picture, so that each object in the picture can be separately edited. Then, the electronic device recommends the editing menu of the object based on the information about the object, so that personalized editing can be performed on each object, to satisfy a personalized requirement for each object, and implement high practicability.

The first information of the first object may be understood as attribute information, feature information, or the like of the first object. The attribute information may include an object type. For example, the object type may include types such as an animal, a person, a plant, a building, or a decoration. The feature information may include a shape, a size, a color, a proportion in a picture, and the like. Certainly, embodiments of this application are not limited thereto.

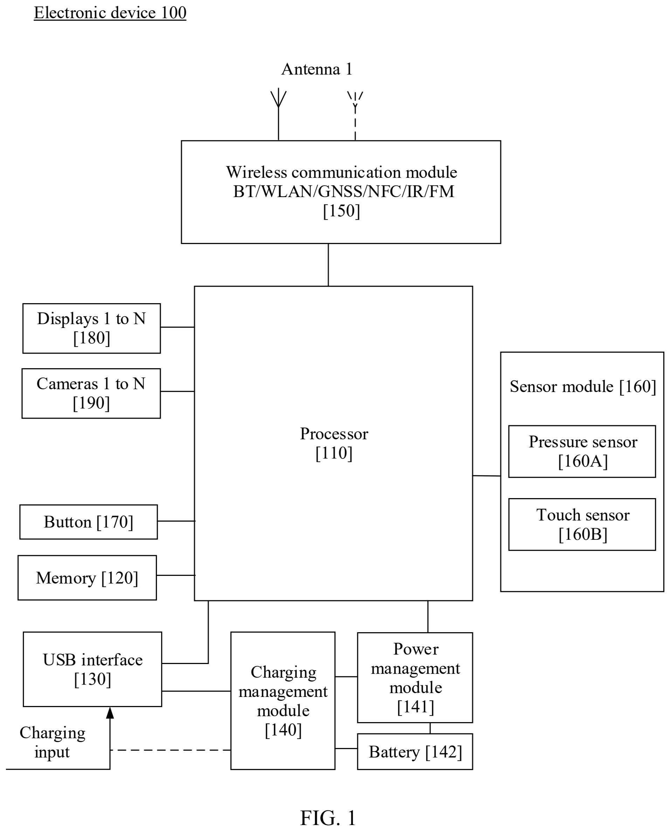

FIG. 1 is a block diagram of a structure of the foregoing electronic device.

As shown in FIG. 1, an electronic device 100 may include a processor 110, a memory 120, a universal serial bus (universal serial bus, USB) interface 130, a charging management module 140, a power management module 141, a battery 142, an antenna 1, a wireless communication module 150, a sensor module 160, a button 170, a display 180, a camera 190, and the like. The sensor module 160 may include a pressure sensor 160A, a touch sensor 160B, and the like.

It may be understood that the structure shown in this embodiment of this application does not constitute a specific limitation on the electronic device. In some other embodiments of this application, the electronic device may include more or fewer components than those shown in the figure, or some components may be combined, or some components may be split, or there may be a different component arrangement. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

The charging management module 140 is configured to receive charging input from a charger. The charger may be a wireless charger or a wired charger. In some wired charging embodiments, the charging management module 140 may receive a charging input from a wired charger through the USB interface 130. In some wireless charging embodiments, the charging management module 140 may receive wireless charging input through a wireless charging coil of the electronic device. The charging management module 140 supplies power to the electronic device through the power management module 141 while charging the battery 142.

The power management module 141 is configured to connect the battery 142, the charging management module 140, and the processor 110. The power management module 141 receives an input of the battery 142 and/or an input of the charging management module 140, and supplies power to the processor 110, the memory 120, the display 180, the wireless communication module 150, and the like. The power management module 141 may be further configured to monitor parameters such as a battery capacity, a quantity of battery cycles, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device may be implemented through the antenna 1, the wireless communication module 150, the modem processor, the baseband processor, and the like.

The antenna 1 is configured to: transmit and receive electromagnetic wave signals. Each antenna in the electronic device may be configured to cover one or more communication frequency bands. Different antennas may be further reused to improve antenna utilization. For example, the antenna 1 may be reused as a diversity antenna of a wireless local area network. In some other embodiments, the antenna may be used in combination with a tuning switch.

The wireless communication module 150 may provide wireless communication solutions applied to the electronic device, including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 150 may be one or more devices integrating at least one communication processing module. The wireless communication module 150 receives an electromagnetic wave through the antenna 1, performs frequency modulation and filtering processing on an electromagnetic wave signal, and sends a processed signal to the processor 110. The wireless communication module 150 may further receive a to-be-sent signal from the processor 110, perform frequency modulation and amplification on the signal, and convert the signal into an electromagnetic wave for radiation through the antenna 1.

The electronic device implements a display function through the GPU, the display 180, the application processor, and the like. The GPU is a microprocessor for image processing, and is connected to the display 180 and the application processor. The GPU is configured to: perform mathematical and geometric computation, and render an image. The processor 110 may include one or more GPUs that execute program instructions to generate or change display information.

The display 180 is configured to display an image, a video, and the like. The display 180 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device may include one or N displays 180, where N is a positive integer greater than 1.

The electronic device may implement a photographing function through an ISP, a video codec, the GPU, the display 180, the application processor, and the like.

The ISP is configured to process data fed back by the camera 190. For example, during photographing, a shutter is pressed, light is transmitted to a light-sensitive element of a camera through a lens, and an optical signal is converted into an electrical signal. The light-sensitive element of the camera transmits the electrical signal to the ISP for processing, and converts the electrical signal into a visible image. The ISP may further perform algorithm optimization on noise, and brightness of the image. The ISP may further optimize parameters such as exposure and a color temperature of a photographing scenario. In some embodiments, the ISP may be disposed in the camera 190.

The camera 190 is configured to capture a static image or a video. An optical image of an object is generated through the lens, and is projected onto the photosensitive element. The light-sensitive element may be a charge-coupled device (charge-coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a format like standard RGB (RGB indicates three colors: red, green, and blue) or YUV ("Y" indicates luminance (Luminance or Luma), namely, a grayscale value, and "U" and "V" indicate chrominance (Chrominance or Chroma)). In some embodiments, the electronic device may include one or N cameras 190, where N is a positive integer greater than 1.

The digital signal processor is configured to process a digital signal, and may process another digital signal in addition to the digital image signal. For example, when the electronic device selects a frequency, the digital signal processor is configured to perform Fourier transform and the like on frequency energy.

The video codec is configured to compress or decompress a digital video. The electronic device may support one or more types of video codecs. Therefore, the electronic device may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device, for example, image recognition, facial recognition, voice recognition, and text understanding, may be implemented through the NPU.

The memory 120 may be configured to store computer-executable program code. The executable program code includes instructions. The memory 120 may include a program storage area and a data storage area. The program storage area may store an operating system, an application required by at least one function (for example, a sound playing function or an image playing function), and the like. The data storage area may store data (for example, audio data and a phone book) created when the electronic device is used, and the like. In addition, the memory 120 may include a high-speed random access memory, and may further include a non-volatile memory such as at least one magnetic disk storage device, a flash storage device, or a universal flash storage (universal flash storage, UFS). The processor 110 runs the instructions stored in the memory 120, and/or the instructions stored in the memory arranged in the processor to perform various function applications and data processing of the electronic device.

The pressure sensor 160A is configured to sense a pressure signal, and can convert the pressure signal into an electrical signal. In some embodiments, the pressure sensor 160A may be disposed on the display 180. There are a plurality of types of pressure sensors 160A, such as a resistive pressure sensor, an inductive pressure sensor, and a capacitive pressure sensor. The capacitive pressure sensor may include at least two parallel plates made of conductive materials. When a force is applied to the pressure sensor 160A, capacitance between electrodes changes. The electronic device determines a pressure strength based on the change of the capacitance. When a touch operation is performed on the display 180, the electronic device detects intensity of the touch operation through the pressure sensor 160A. The electronic device may calculate a touch position based on a detection signal of the pressure sensor 160A. In some embodiments, touch operations that are performed in a same touch position but have different touch operation intensity may correspond to different operation instructions. For example, when a touch operation whose touch operation intensity is less than a first pressure threshold is performed on a Messaging application icon, an instruction for viewing an SMS message is performed. When a touch operation whose touch operation intensity is greater than or equal to the first pressure threshold is performed on the Messaging application icon, an instruction for creating a new SMS message is performed.

The touch sensor 160B is also referred to as a "touch device". The touch sensor 160B may be disposed on the display 180, and the touch sensor 160B and the display 180 constitute a touchscreen, which is also referred to as a "touch screen". The touch sensor 160B is configured to detect a touch operation performed on or near the touch sensor 160B. The touch sensor may transfer the detected touch operation to the application processor to determine a type of the touch event. A visual output related to the touch operation may be provided through the display 180. In some other embodiments, the touch sensor 160B may alternatively be disposed on a surface of the electronic device at a position different from that of the display 180.

The button 170 includes a power button, a volume button, and the like. The button 170 may be a mechanical button or a touch button. The electronic device may receive a button input, and generate a button signal input related to user setting and function control of the electronic device.

Certainly, the electronic device may further include another functional unit. This is not limited in embodiments of this application.

The electronic device 100 is an electronic device having an image display function. For example, the electronic device 100 may be a mobile phone (mobile phone), a tablet computer (Pad), a laptop, a notebook computer, an ultra-mobile personal computer (ultra-mobile personal computer, UMPC), a handheld computer, a netbook, a personal digital assistant (personal digital assistant, PDA), a wearable electronic device, or the like.

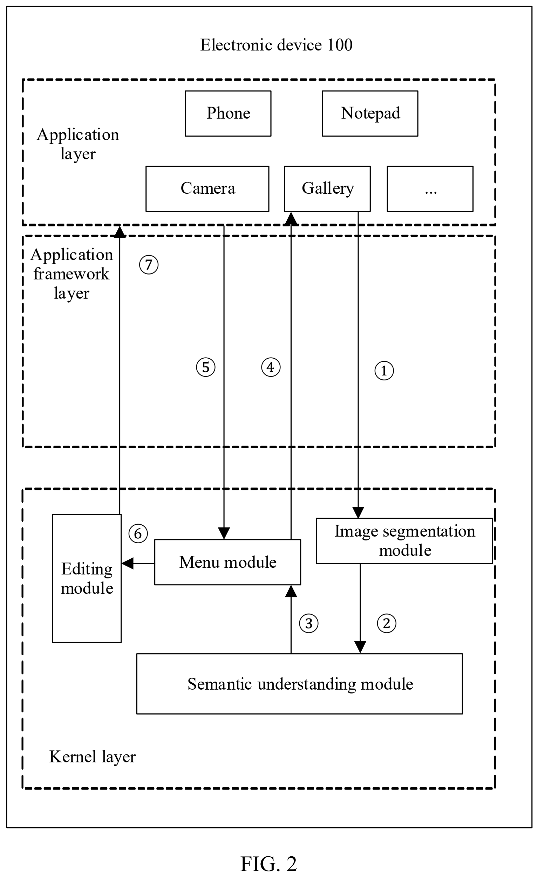

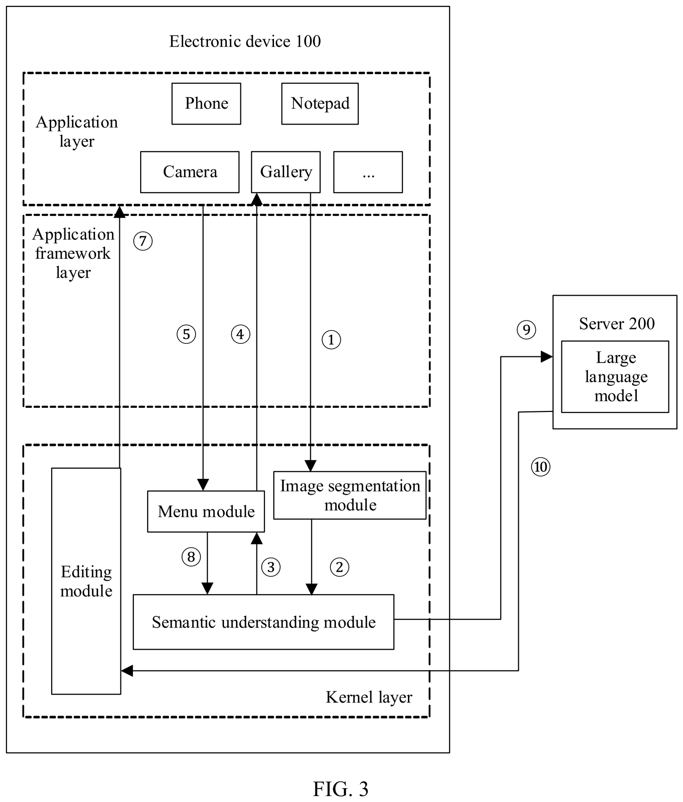

Refer to FIG. 2 and FIG. 3. FIG. 2 and FIG. 3 are block diagrams of a software structure of an electronic device according to an embodiment of this application.

As shown in FIG. 2 and FIG. 3, in a layered architecture, software is divided into several layers, and each layer has a clear role and task. The layers communicate with each other through a software interface. In some feasible implementations, an operating system of the electronic device may be divided into an application layer, an application framework layer, an Android runtime (Android runtime) and system library, and a kernel layer from top to bottom.

The application layer may include a series of application packages.

As shown in FIG. 2 and FIG. 3, the application packages may include applications (application, APP) such as an account application, Bluetooth, a device management application (an application having a device management function), Navigation, Notepad, WLAN, Messaging, Gallery, Camera, Calendar, and Phone.

The application framework layer provides an application programming interface and a programming framework for an application at the application layer. The application framework layer includes some predefined functions.

As shown in FIG. 2 and FIG. 3, the application framework layer may include a window manager, a content provider, a view system, a phone manager, a resource manager, a notification manager, and the like.

The window manager is configured to manage a window program. The window manager may obtain a size of a display, determine whether there is a status bar, lock a screen, take a screenshot, and the like.

The content provider is configured to: store and obtain data, and enable the data to be accessed by an application. The data may include a video, an image, an audio, calls that are made and received, a browsing history and bookmarks, an address book, and the like.

The view system includes visual controls such as a control for displaying a text and a control for displaying a picture. The view system may be configured to construct an application. A display interface may include one or more views. For example, a display interface including a notification icon of Messaging may include a text display view and a picture display view.

The phone manager is configured to provide a communication function of the device, for example, management of a call status (including answering or declining a call).

The resource manager provides various resources such as a localized character string, an icon, a picture, a layout file, and a video file for an application.

The notification manager enables an application to display notification information in the status bar, and may be configured to convey a notification message. The notification manager may automatically disappear after a short pause without requiring a user interaction. For example, the notification manager is configured to notify download completion, provide a message notification, and the like. The notification manager may alternatively be a notification that appears in a top status bar of the system in a form of a graph or a scroll bar text, for example, a notification of an application running on a background or a notification that appears on the screen in a form of a dialog Interface. For example, text information is displayed in the status bar, an announcement is given, the electronic device vibrates, or an indicator light blinks.

The Android runtime includes a core library and a virtual machine. The Android runtime is responsible for scheduling and management of the operating system.

The core library includes two parts: One part is a performance function that a java language needs to invoke, and the other part is a core library of Android.

The application layer and the application framework layer run in the virtual machine. The virtual machine executes Java files at the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver. The kernel layer further includes an image segmentation module, a menu module, an editing module, and a semantic understanding module. The image segmentation module is configured to split an image of each object away from a picture. The menu module is configured to recommend an editing menu corresponding to each object. The editing module is configured to edit an object based on an editing parameter. The semantic understanding module is configured to understand each object in a picture.

It should be noted that, the modules shown in FIG. 2 and FIG. 3 may be integrated into the application framework layer, or may be integrated into a specific application, for example, a gallery application. This is not specifically limited in embodiments of this application.

In an example, a specific operating process based on the software architecture of the electronic device 100 shown in FIG. 2 may be as follows: Step ①: The electronic device 100 receives an operation of a user on an application icon of a first application. The electronic device 100 displays an interface of the first application, where a first picture is displayed on the interface, and the first picture may include a first object. The image segmentation module of the electronic device 100 splits the first object away from the first picture. Step ②: The image segmentation module of the electronic device 100 sends, to the semantic understanding module, information about the first object that is split away, and the semantic understanding module understands the first object based on the information about the first object. Step ③: The semantic understanding module generates an instruction, to command the menu module of the electronic device 100 to recommend an editing menu of the first object. Step ④: The electronic device 100 displays the editing menu that is of the first object and that is recommended by the menu module. Step ⑤: The electronic device 100 receives an operation of the user on the editing menu. Step ⑥: In response to the operation, the editing module of the electronic device 100 edits the first object based on a parameter of the editing menu. Step ⑦: The electronic device 100 displays an edited first picture.

In another example, a specific operating process based on the communication system and the software architecture of the electronic device 100 shown in FIG. 3 may be as follows: A difference from the foregoing descriptions lies in that in step ⑤, the electronic device 100 receives an operation of the user on the editing menu, where the editing menu may be AI editing. In response to the operation, the electronic device 100 displays an input box. After the user enters editing content in the input box, the electronic device 100 performs step ⑧ in which the semantic understanding module understands semantics expressed by the editing content. In step ⑨, the semantic understanding module uploads the understood semantics and the information about the first object to another device, for example, a server 200, and the server 200 edits the first object based on the semantics understood by the semantic understanding module and the information about the first object, to obtain edited object information. In step ⑩, the server 200 sends the edited object information to the editing module. Then, in step ⑦, the editing module sends the edited object information to the application layer for displaying. In this case, the electronic device 100 displays an edited first picture. Certainly, when the user enters the editing content of the first object in a first input box, the electronic device 100 may edit the first object based on the editing content. Specifically, the semantic understanding module of the electronic device 100 understands semantics expressed by the editing content, and sends the understood semantics to the editing module. The editing module may edit the first object based on the semantics understood by the semantic understanding module. This is not specifically limited in embodiments of this application.

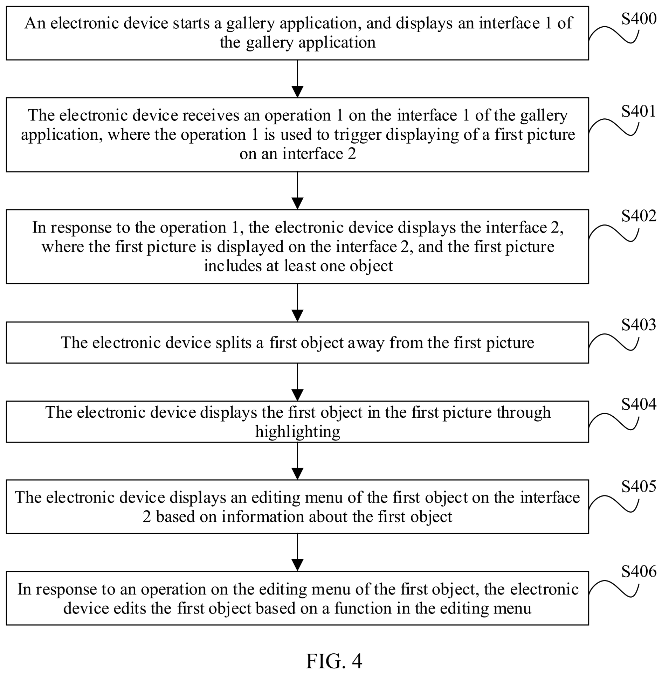

FIG. 4 is a schematic flowchart of a picture editing method according to an embodiment of this application. As shown in FIG. 4, the method may include S400 to S406 (some steps are optional). For details about S400 to S406, refer to descriptions in the following embodiments. Details may be as follows:

S400: An electronic device starts a gallery application, and displays an interface 1 of the gallery application.

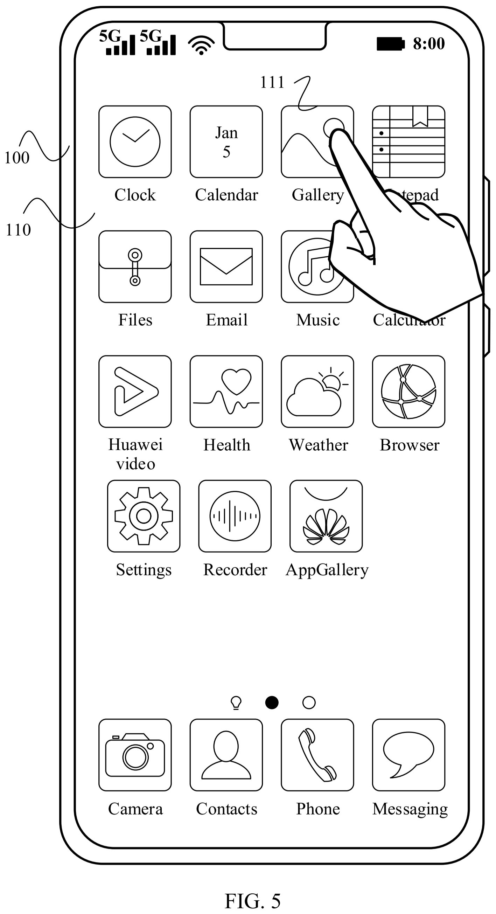

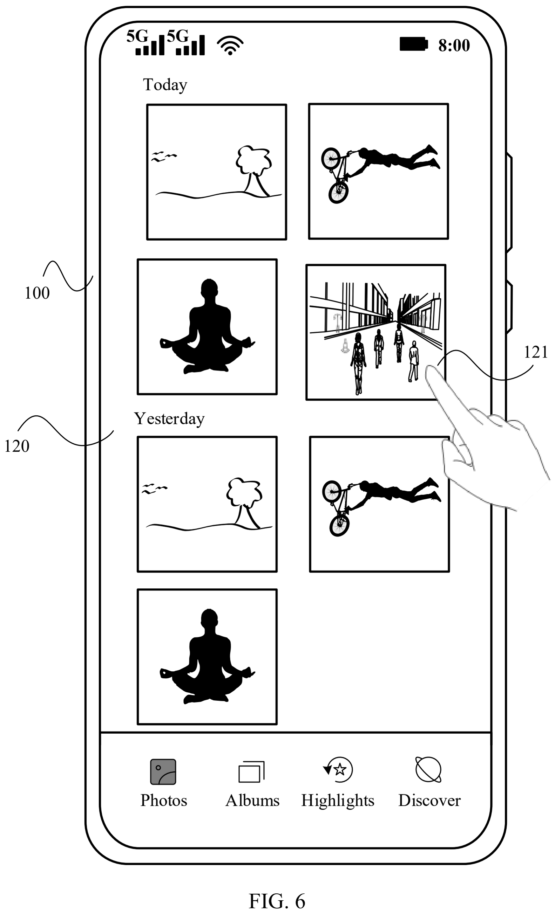

In an example, as shown in FIG. 5, a user taps an interface 110 of the electronic device 100 to display an icon 111 of the gallery application. The electronic device 100 starts the gallery application in response to the tap operation of the user. A display interface of the electronic device 100 jumps to an interface 120 (namely, the interface 1) shown in FIG. 6. The interface 120 includes a plurality of pictures, and the plurality of pictures include the first picture. For example, the first picture may be a picture 121.

S401: The electronic device receives an operation 1 on the interface 1 of the gallery application, where the operation 1 is used to trigger displaying of the first picture on an interface 2.

The operation 1 may include a tap operation, a press operation, a slide operation, and the like.

In an example, the operation 1 may be a tap operation, and the interface 1 may include thumbnails of the plurality of pictures. Correspondingly, the operation 1 on the interface 1 of the gallery application may be understood as a tap operation on a thumbnail of the first picture. For example, the user taps the picture 121 (namely, the thumbnail of the first picture) shown in FIG. 6. The electronic device receives the operation of tapping the picture 121 by the user.

S402: In response to the operation 1, the electronic device displays the interface 2, where the first picture is displayed on the interface 2, and the first picture includes at least one object.

The object may include a person, an animal, a building, a decoration, or the like. Certainly, the object may further include another thing, for example, a plant or the sky. This is not specifically limited in embodiments of this application.

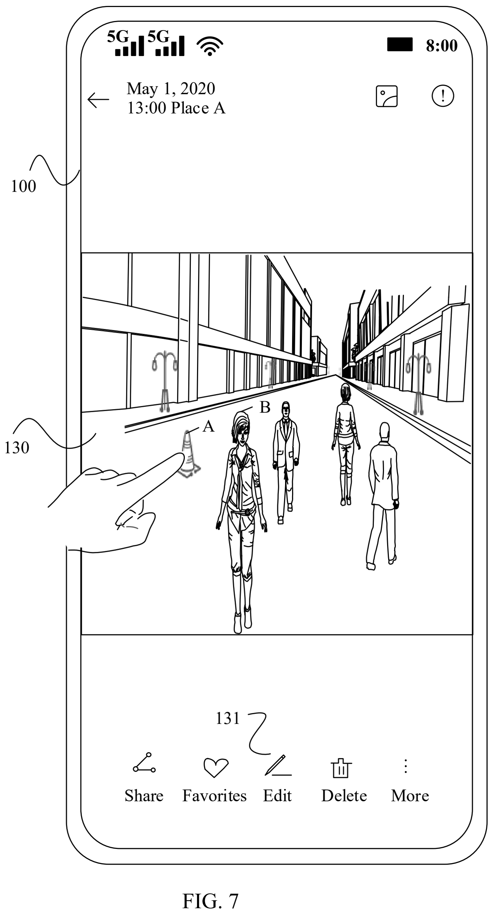

In an example, the foregoing example is still used. In response to the tap operation of the user on the picture 121 shown in FIG. 6, the electronic device displays an interface 130 shown in FIG. 7. The interface 130 is a display interface of the first picture corresponding to the picture 121. The interface may include the picture 121, a control used to share the picture, a control used to add the picture to Favorites, a control 131 used to edit the picture, a control used to delete the picture, and the like.

In a specific implementation, for details about S400 to S402, refer to step ① in FIG. 2 and FIG. 3. Details are not described herein again.

S403: The electronic device splits the first object away from the first picture.

Splitting the first object away from the first picture may be understood as segmenting the first object from another object in the first picture. In this way, when the user performs an operation on the first object, the another object in the picture is not affected.

In a specific implementation, S403 may be specifically implemented as S4031: The electronic device splits the first object away from the first picture based on association of an image feature of the first object in the first picture. Specifically, the electronic device may split the first object away from the first picture by using a segment anything model (segment anything model, SAM). Certainly, the electronic device may split each object away from the first picture. Alternatively, the electronic device may split several objects away from the first picture. This is not specifically limited in embodiments of this application, and determining needs to be performed based on an actual situation during specific implementation.

In a specific implementation, the electronic device may split the first object away from the first picture at the following occasions.

Occasion 1: When the electronic device captures the first picture, the electronic device splits the first object away from the first picture.

Occasion 2: After the electronic device captures the first picture, when the electronic device is in an idle state, the electronic device splits the first object away from the first picture.

Occasion 3: When the electronic device displays the first picture, the electronic device splits the first object away from the first picture.

Occasion 4: When the electronic device receives an operation of the user on the first picture, the electronic device splits the first object away from the first picture in response to the operation. The operation may include a touch and hold operation. The touch and hold operation may be understood as that pressing duration is greater than preset duration. For example, the touch and hold operation is an operation of pressing for more than 3 seconds, or the touch and hold operation is an operation of pressing for more than 5 seconds. In an example, when the electronic device receives the touch and hold operation of the user on the first object in the first picture, the electronic device splits the first object away from the first picture in response to the operation. For example, the electronic device receives an operation of tapping and holding a traffic cone A shown in FIG. 7 by the user, and the electronic device splits the traffic cone A away from the first picture in response to the operation.

In a specific implementation, for details about S403, refer to step ② in FIG. 2 and FIG. 3. Details are not described herein again.

In this way, the electronic device can edit the object by splitting the object away from the picture, so that each object in the picture can be separately edited without affecting another object, and personalized editing can be performed on each object, to satisfy a personalized requirement for each object, and implement high practicability.

S404: The electronic device displays the first object in the first picture through highlighting.

The displaying through highlighting may be understood as displaying through marking. A purpose of the displaying through highlighting is to notify the user that an operation like editing can be separately performed on the object displayed through highlighting. A representation of the displaying through highlighting may include: displaying by using dotted lines, displaying in red, displaying through lightening, displaying through blurring, and the like. Certainly, the displaying through highlighting is not limited to the foregoing examples. This is not specifically limited in embodiments of this application.

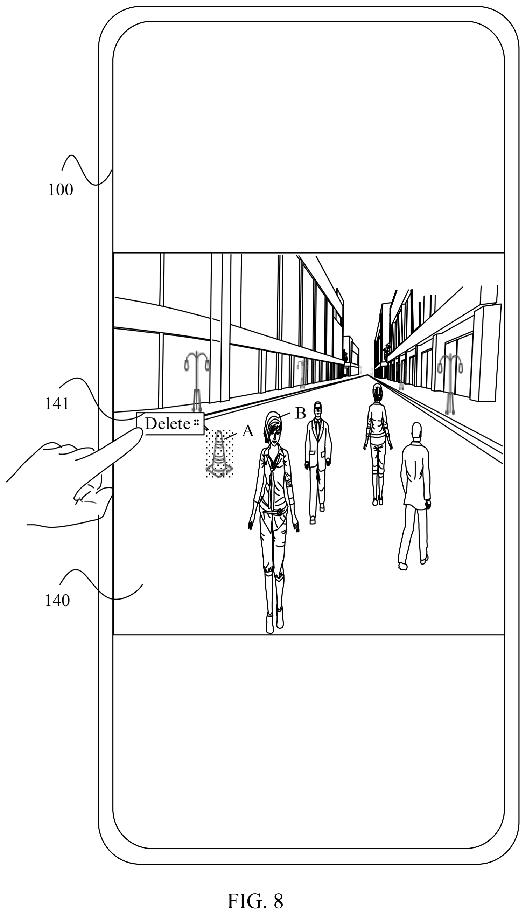

In a specific implementation, S404 may be specifically implemented as follows: When the user performs an operation on the first object in the first picture, the electronic device displays the first object in the first picture through highlighting. For example, the foregoing example is still used. When the user taps the traffic cone A shown in FIG. 7, the electronic device separates the traffic cone A from another object in the first picture. In this case, the electronic device displays an interface 140 shown in FIG. 8, and the traffic cone A is displayed on the interface 140 through highlighting. For example, a contour of the traffic cone A is displayed by using dotted lines, the traffic cone A is displayed in red, an area box of the traffic cone A is displayed by using dotted lines, or the traffic cone A is displayed through marking.

In this way, the electronic device splits the object away from the picture, and may display, through highlighting, the object that is split away, so that the user can select the object and edit the object, to provide convenience for the user to edit the object subsequently.

In a specific implementation, when the electronic device receives an operation of the user on the first picture, the electronic device displays the first object through highlighting in response to the operation. The operation may include a touch and hold operation. The touch and hold operation may be understood as that pressing duration is greater than preset duration. For example, the touch and hold operation is an operation of pressing for more than 3 seconds, or the touch and hold operation is an operation of pressing for more than 5 seconds. In addition, when the electronic device displays the first object through highlighting, and the user performs an operation on a second object in the first picture, the electronic device displays the second object through highlighting. The operation on the second object may include a tap operation on the second object, for example, a single tap operation. For example, the foregoing example is still used. As shown in FIG. 7, when the user performs a touch and hold operation on the traffic cone A, the electronic device displays the traffic cone A through highlighting. In this case, the electronic device enters an object marking state. When the user taps a person B shown in FIG. 7, the electronic device may display the person B in a dotted line display manner. To be specific, when the electronic device is in the object marking state, the electronic device may switch and display each object through highlighting based on a switching operation of the user between the objects.

It should be noted that, in this embodiment of this application, S404 may be an optional step.

S405: The electronic device displays an editing menu of the first object on the interface 2 based on information about the first object.

In an example, the information about the first object represents the first object. The information about the first object may include feature information or description information of the first object. The information about the first object may include a type, an attribute, a primary/secondary attribute in the picture, and the like. The primary/secondary attribute of the object in the picture may be predefined, or may be determined based on the type and/or the attribute of the first object. This is not specifically limited in embodiments of this application.

In an example, the editing menu may include at least one of the following editing function items: deletion, beautification, background modification, and artificial intelligence (artificial intelligence, AI) retouching. The background modification may include at least one of background replacement, background blurring, and background color removal. The beautification may include at least one of one-tap beautification, brightening, sculpting, smoothing, and skin tone. Certainly, embodiments of this application are not limited to the foregoing examples.

In an example, the editing menu is determined based on the information about the first object. In other words, the electronic device may intelligently recommend the editing menu corresponding to the first object based on the information about the first object. In a specific implementation, S405 may be specifically as follows: The electronic device determines the editing menu of the first object based on the information about the first object, each information priority, and a correspondence between information and an editing function item. For example, it is assumed that a priority of a person is higher than a priority of a thing, editing function items corresponding to the person are deletion, beautification, and background modification, and editing function items corresponding to the thing are deletion and background modification. Based on this, if the first object is a person, the electronic device may determine that the editing menu of the first object may include deletion, beautification, and background modification. If the first object is a thing, the electronic device may determine that the editing menu of the first object may include deletion and background modification.

In this embodiment of this application, the electronic device specifically recommends an editing menu of an object in the picture based on information about the object, so that each object corresponds to a separate editing menu. When the user operates the editing menu, the electronic device edits the first object based on the function in the editing menu. In this way, the electronic device can separately edit each object in the picture, so that personalized editing can be performed on each object, to satisfy the personalized requirement for each object, and implement high practicability.

In another specific implementation, S405 may be specifically as follows: The electronic device determines the editing menu of the first object based on the information about the first object, each information priority, the primary/secondary attribute of the first object in the picture, and a correspondence between information and an editing function item. For determining the primary/secondary attribute of the object in the picture, refer to the following related descriptions. Details are not described herein. For example, it is assumed that a priority of a person is higher than a priority of a thing, the person is a primary object in the picture, the thing is a secondary object in the picture, editing function items corresponding to the person are deletion, beautification, and background modification, and editing function items corresponding to the thing are deletion and background modification. Based on this, if the first object is a person, the electronic device may determine that the editing menu of the first object may include deletion, beautification, and background modification. If the first object is a thing, the electronic device may determine that the editing menu of the first object may include deletion and background modification. For example, if the first object is a person and the first object is a primary object in the picture, the electronic device may determine that the editing menu of the first object may include beautification. Alternatively, the electronic device may further determine a blurriness/definition of an object other than the person in the picture, and determine that an editing menu of the object may include background replacement, high-definition repair, and the like.

In another example, the editing menu is determined based on historical behavior of the user. In other words, the electronic device may record the historical behavior of the user, and recommend the editing menu corresponding to the first object based on the historical behavior of the user. The historical behavior of the user may include a makeup style of the user, picture editing behavior of the user, a preference of the user, and the like. For example, it is assumed that the picture includes a user image, and the historical behavior of the user includes the makeup style of the user, for example, an intellectual style. In this case, the electronic device may display an editing menu for the user image, the editing menu may be one-tap beautification, and an editing parameter of the one-tap beautification is a picture retouching parameter of the intellectual style.

Certainly, the editing menu may alternatively be determined based on a combination of the information about the first object and the historical behavior of the user. For example, it is assumed that the picture includes a user image, and the historical behavior of the user includes modifying a background in the picture. In this case, the electronic device may display an editing menu for the user image, and the editing menu may be background modification.

In this embodiment of this application, the electronic device specifically recommends the editing menu of the object with reference to the historical behavior information of the user and the information about the object, and may recommend an editing menu with reference to a preference of the user. When the user operates the editing menu, the electronic device edits the first object based on the function in the editing menu, so that preferences and aesthetics of different users can be satisfied, convenience is provided for the user to edit the object, and user experience is improved.

In an example, the electronic device may spontaneously display the editing menu of the first object on the interface 2 based on the information about the first object; or the electronic device may display the editing menu of the first object on the interface 2 based on the information about the first object when being triggered by the user. Details are described in the following:

In a first manner, the electronic device spontaneously displays the editing menu of the first object.

In other words, the electronic device may spontaneously display the editing menu of the first object on the interface 2 based on the information about the first object.

In a specific implementation, S405 may be as follows: The electronic device may display the editing menu of the first object on the interface 2 based on the information about the first object. For example, it is assumed that an object A is the traffic cone A, and an object B is the person B. The electronic device may display deletion as an editing menu of the object A, and beautification as an editing menu of the object B.

In another specific implementation, S405 may be as follows: The electronic device may determine a primary object in objects based on information about the objects, and then display an editing menu of the primary object on the interface 2. In other words, the electronic device may display an editing menu of at least one object on the interface 2 based on the information about the objects. In other words, when there are a plurality of primary objects in the picture, the electronic device may display an editing menu of each primary object, or may display a common editing menu or a comprehensive editing menu of the primary objects, or may display an editing menu of one primary object, and display prompt information for another primary object, where the prompt information is used to prompt the user whether to edit the object.

For example, S405 may be specifically implemented as follows: S4051: The electronic device determines, based on the information about the objects and importance levels of the objects, that the first object is a primary object in the first picture. For example, it is assumed that an importance level of a person is 3, an importance level of a thing is 2, an importance level of an object whose size in the picture has a proportion greater than a threshold is 2, and an importance level of an object whose size in the picture has a proportion less than or equal to the threshold is 1. An object a is a person whose proportion in the picture is greater than the threshold, and an object b is a thing whose proportion in the picture is less than the threshold. In this case, an importance level of the object a is 3+2=5, and an importance level of the object b is 2+1=3. The importance level of the object a is greater than the importance level of the object b. Therefore, the electronic device determines that the object a is a primary object and the object b is a secondary object. S4052: The electronic device displays the editing menu of the first object on the interface 2. For example, the foregoing example is still used. The electronic device displays an editing menu of the object a.

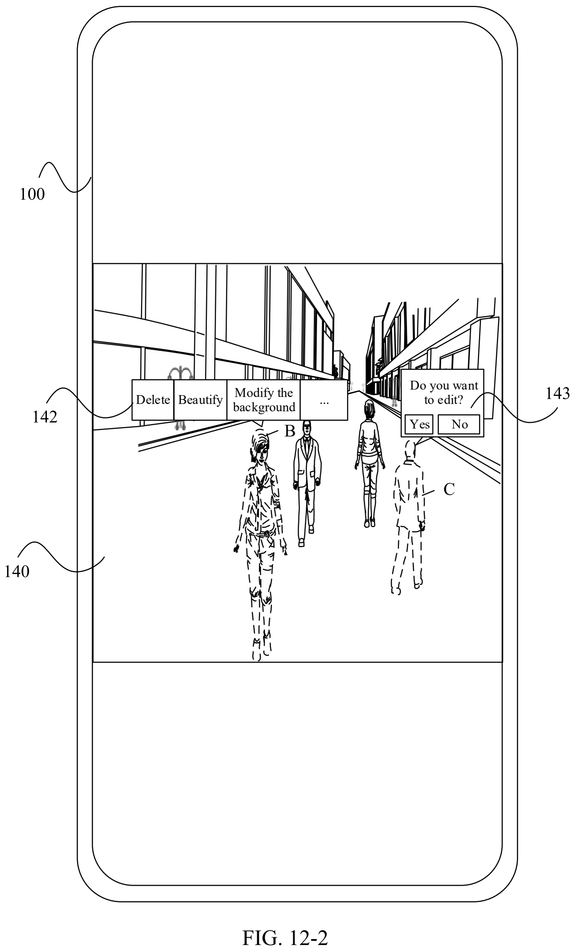

For example, S405 may be specifically implemented as follows: S4053: The electronic device determines, based on the information about the objects and importance levels of the objects, that both the first object and the second object are primary objects in the first picture. For example, it is assumed that an importance level of a person is 3, an importance level of a thing is 2, an importance level of an object whose size in the picture has a proportion greater than a threshold is 3, and an importance level of an object whose size in the picture has a proportion less than or equal to the threshold is 2. An object a is a person whose proportion in the picture is less than the threshold, and an object b is a thing whose proportion in the picture is greater than the threshold. In this case, an importance level of the object a is 3+2=5, and an importance level of the object b is 2+3=5. If the importance level of the object a is consistent with the importance level of the object b, the electronic device determines that both the object a and the object b are primary objects. S4054: The electronic device displays the editing menu of the first object and prompt information of the second object on the interface 2. For example, the foregoing example is still used. The electronic device displays beautification and background modification as an editing menu of the object a, and displays "Do you want to edit to the object b?" as prompt information of the object b. For another example, as shown in FIG. 12-2, both a person B and a person C are primary objects in the first picture. In this case, the electronic device displays an editing menu of the person B, and displays prompt information 143 corresponding to the person C. For example, the prompt information 143 may be "Do you want to edit?". If the user taps a "Yes" control, the electronic device displays an editing menu of the person C; or if the user taps a "No" control, the electronic device determines that the user does not need to edit the person C.

In this embodiment of this application, the electronic device may determine primary and secondary attributes of the objects in the picture and obtain primary objects and secondary objects through screening. Then, the electronic device may uniformly recommend an editing menu for the primary objects, or may separately recommend editing menus for the primary objects, or may recommend a menu for one primary object, and display prompt information used to prompt the user whether to edit another primary object. The electronic device may recommend an editing menu of deletion for the secondary object. In this way, the electronic device may selectively recommend a menu, so that an image editing operation has a primary/secondary attribute, and the image editing operation is simpler.

In a second manner, the electronic device displays the editing menu of the first object when being triggered by the user.

In other words, in response to a user operation, the electronic device may display the editing menu of the first object on the interface 2 based on the information about the first object. The user operation may be understood as an operation of the user on the first picture, or an operation of the user on an object in the first picture. The operation may include a tap operation, a touch and hold operation, and the like. The touch and hold operation may be understood as that pressing duration is greater than preset duration. For example, the touch and hold operation is an operation of pressing for more than 3 seconds.

In a specific implementation, S405 may be as follows: The electronic device receives an operation of the user on the first picture, and in response to the operation, the electronic device displays the editing menu of the first object on the interface 2 based on the information about the first object. For example, when the user taps a display area of the first picture, the electronic device may display the editing menu of the first object based on the information about the first object in the first picture.

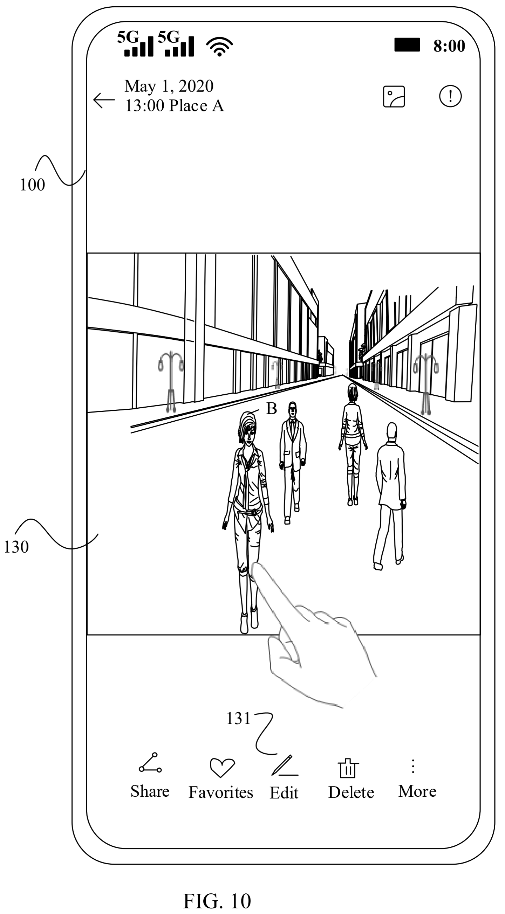

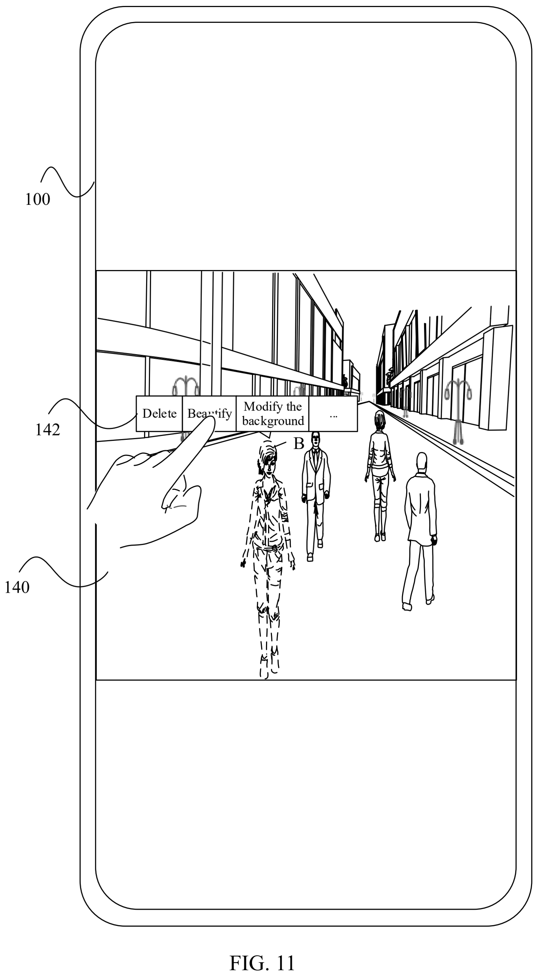

In another specific implementation, S405 may be as follows: The electronic device receives an operation of the user on the first object in the objects, and in response to the operation, the electronic device displays the editing menu of the first object on the interface 2 based on the information about the first object. For example, when the user taps the traffic cone A shown in FIG. 7, the electronic device receives the tap operation of the user. In response to the operation, the electronic device displays the interface 140 shown in FIG. 8, and displays an editing menu 141 of the traffic cone A on the interface, where the editing menu 141 is deletion. For example, when the user taps the person B shown in FIG. 10, the electronic device receives the tap operation of the user. In response to the operation, the electronic device displays an interface 140 shown in FIG. 11, and displays an editing menu 142 of the person B on the interface, where the editing menu 142 includes deletion, beautification, and background modification.

In a specific implementation, for details about S405, refer to step ③ and step ④ in FIG. 2 and FIG. 3. Details are not described herein again.

In this way, the electronic device can edit the object by splitting the object away from the picture, so that each object in the picture can be separately edited. Then, the electronic device recommends the editing menu of the object based on the information about the object, so that personalized editing can be performed on each object, to satisfy a personalized requirement for each object, and implement high practicability.

In addition, the electronic device may further recommend an editing menu of each item based on the historical behavior of the user, so that preferences and aesthetics of different users can be satisfied, convenience is provided for the user to edit the item, and user experience is improved.

S406: In response to the operation on the editing menu of the first object, the electronic device edits the first object based on a function in the editing menu.

The electronic device may locally edit the first object, or may upload editing content of the first object to a server, and the server edits the first object. Details are as follows:

In a specific implementation, the editing menu may include AI retouching, and S406 may be specifically as follows: In response to an operation on the AI retouching corresponding to the first object, the electronic device displays a first input box, where the first input box is an input box of the first object. When the user enters the editing content of the first object in the first input box, the electronic device edits the first object based on the editing content. A format of the editing content may be a text format or an audio format. This is not specifically limited in embodiments of this application. Specifically, for details about S406, refer to step ⑤ to step ⑦ in FIG. 2. Details are not described herein again. In this embodiment of this application, the electronic device can implement automatic picture retouching through AI retouching, to simplify a picture retouching operation, and make picture retouching more convenient and quicker.

In another specific implementation, the editing menu may include AI retouching. S406 may be specifically as follows: In comparison with the foregoing descriptions, a difference lies in that when the user enters the editing content of the first object in the first input box, the electronic device reports the editing content and the information about the first object to another device (for example, a server or a cloud platform), and the another device edits the first object based on the editing content, and returns edited object information. The electronic device displays an edited first object based on the edited object information. The information about the first object may include coordinate information of the first object in the picture. Certainly, the electronic device may further report the information about the first picture to another device. Specifically, for details about S406, refer to step ⑤, step ⑦, step ⑧, step ⑨, and step ⑩ in FIG. 3. Details are not described herein again. In this embodiment of this application, the electronic device reports the editing content and the information about the first object to the another device, and the another device edits the first object, to reduce a calculation amount of the electronic device and save resources of the electronic device.

Different objects correspond to different editing menus. The following describes in detail different objects and corresponding editing menus and scenarios.

### Scenario 1: Scenario of deleting a thing

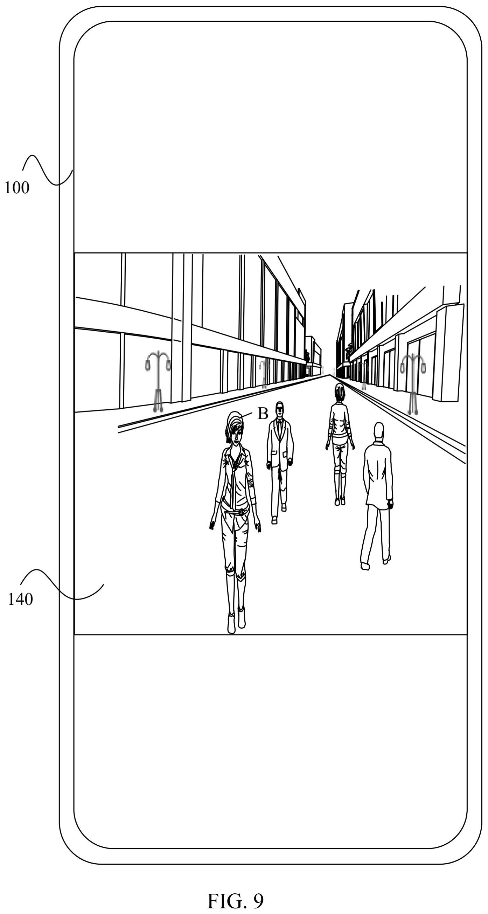

In a specific implementation, as shown in FIG. 8, the first object is a thing, and the editing menu is deletion. In this case, S406 may be specifically implemented as follows: In response to a delete operation on the first object, the electronic device deletes the first object. For example, as shown in FIG. 8, the electronic device receives a tap operation of the user on the editing menu (namely, deletion) 141 of the traffic cone A. In response to the operation, the electronic device deletes the traffic cone A, and pads an area in which the traffic cone A is located based on an image feature outside the area. In this case, the interface of the electronic device changes from the interface 140 shown in FIG. 8 to an interface 140 shown in FIG. 9. On the interface, the traffic cone A disappears, and along an edge of the area in which the traffic cone A is originally located, an image feature of a street is padded in the area, to obtain a picture shown in FIG. 9.

### Scenario 2: Scenario of beatifying a person

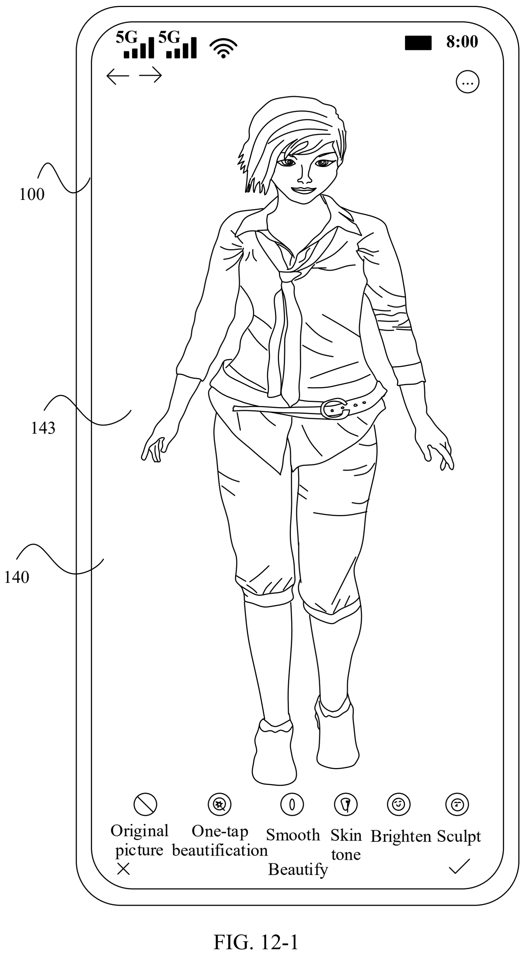

In a specific implementation, as shown in FIG. 11, the first object is a person, and the editing menu includes deletion, beautification, background modification, and the like. S406 may be specifically implemented as follows: S4061: In response to a tap operation on a beautification menu corresponding to the person, the electronic device displays an interface 3, where an image of the person and a function item of the beautification menu are displayed on the interface 3, and the function item includes one-tap beautification, smoothing, skin tone, brightening, sculpting, and the like. Certainly, the function item of the beautification menu is not limited to the foregoing examples, and may further include eye enlarging. This is not specifically limited in embodiments of this application. For example, as shown in FIG. 11, the electronic device receives a tap operation of the user on the editing menu (namely, beautification) of the person B. In response to the operation, the electronic device displays an interface 140 shown in FIG. 12-1. The interface includes first function items such as one-tap beautification, smoothing, skin tone, brightening, and sculpting. S4062: In response to an operation on the first function item, the electronic device edits the person based on a parameter of the function item. For example, as shown in FIG. 12-1, the first function item is the smoothing. When the user taps the smoothing, the electronic device performs a smooth repair operation on a face of the person B based on a parameter of the smoothing function item. Similarly, the first function item is the one-tap beautification. When the user taps the one-tap beautification, the electronic device performs a beautification operation on the face of the person B based on a parameter of the one-tap beautification.

In another specific implementation, in comparison with the foregoing descriptions, a difference lies in that the electronic device receives an operation of the user on an image of the person on the interface 3. The operation may include a drag operation, a move operation, a zoom operation, and the like. In response to the user operation, the electronic device adjusts a position and a size of the image of the person on the interface 3. When one or more edges of the image of the person exceed a display of the electronic device, the electronic device receives a combined operation of the user on the image of the person and the foregoing function item, where the combined operation may include a touch and hold operation on the image of the person and a tap operation on the function item. In response to the operation, the electronic device adjusts the image of the person to a middle area of the display for displaying, that is, the electronic device displays the image of the person in a center of the display. For example, as shown in FIG. 12-1, when the image of the person B exceeds the display of the electronic device 100, the user touches and holds the image of the person B, and then taps the one-tap beautification function item. In this case, in response to the operation, the electronic device 100 displays the image of the person B in the center of the display, and performs a one-tap beautification editing operation on the image of the person B.

In another specific implementation, in comparison with the foregoing descriptions, a difference lies in that an image that is of the person and that is obtained through one-tap beautification and the function item of the beautification menu are displayed on the interface 3. In other words, when the user operates the editing menu of beautification, the electronic device performs the one-tap beautification editing operation by default. For example, as shown in FIG. 11, when the user taps the editing menu of beautification, the electronic device 100 performs the one-tap beautification operation on the image of the person B, and jumps to the interface 140 shown in FIG. 12-1. The image of the person B displayed on the interface 140 is a beautified image. When the user is not satisfied with the image, the user may operate function items such as smoothing, skin tone, brightening, and sculpting on the interface 140 shown in FIG. 12-1. The electronic device 100 may re-adjust an editing parameter of the image of the person B based on the user operation, to re-edit the image of the person B.

### Scenario 3: Scenario of modifying a background of a person

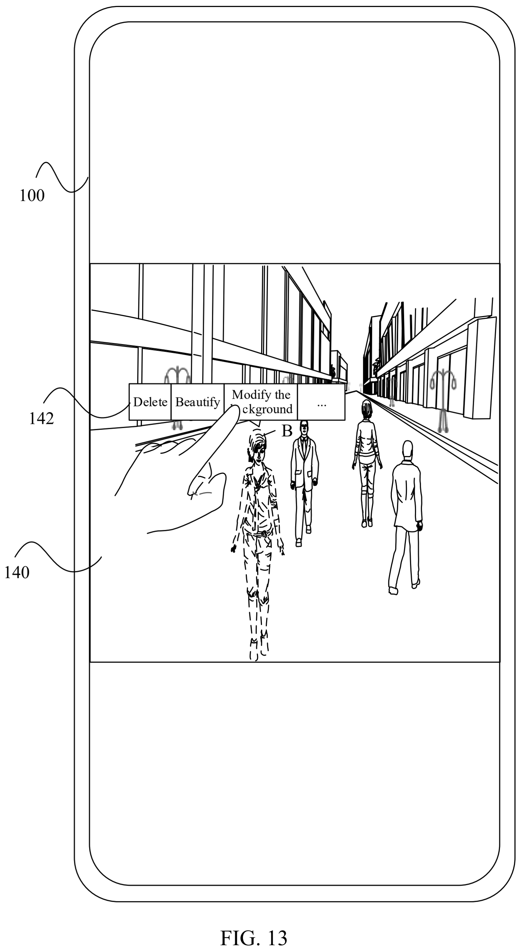

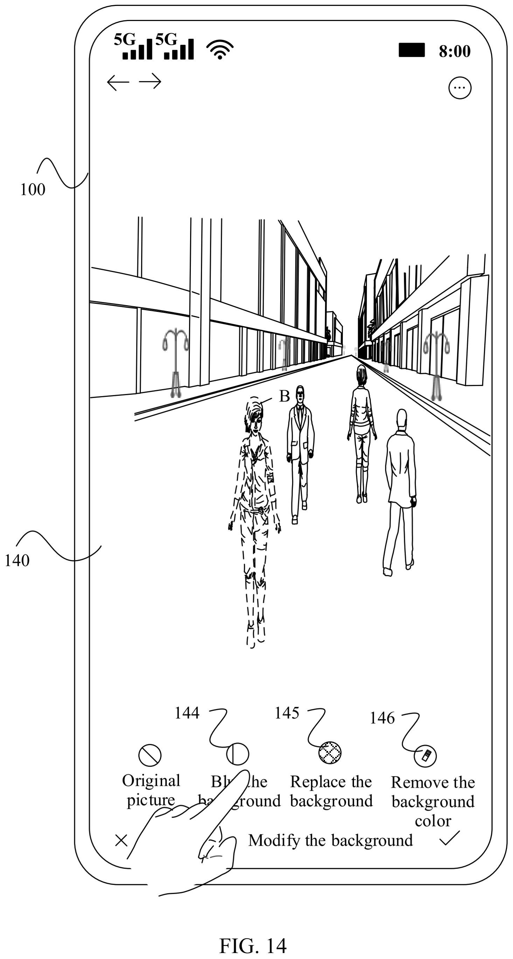

In a specific implementation, as shown in FIG. 13, the first object is a person, and the editing menu includes deletion, beautification, background modification, and the like. S406 may be specifically implemented as follows: S4063: In response to a tap operation on a background modification menu corresponding to the person, the electronic device displays an interface 4, where a function item of the background modification menu is displayed on the interface 4, and the function item includes background blurring, background replacement, background color removal, and the like. For example, as shown in FIG. 13, the electronic device receives a tap operation of the user on the editing menu (namely, background modification) of the person B. In response to the operation, the electronic device displays an interface 140 shown in FIG. 14. The interface includes second function items such as background blurring, background replacement, and background color removal. S4064: In response to an operation on the second function item, the electronic device edits the person based on a parameter of the function item.

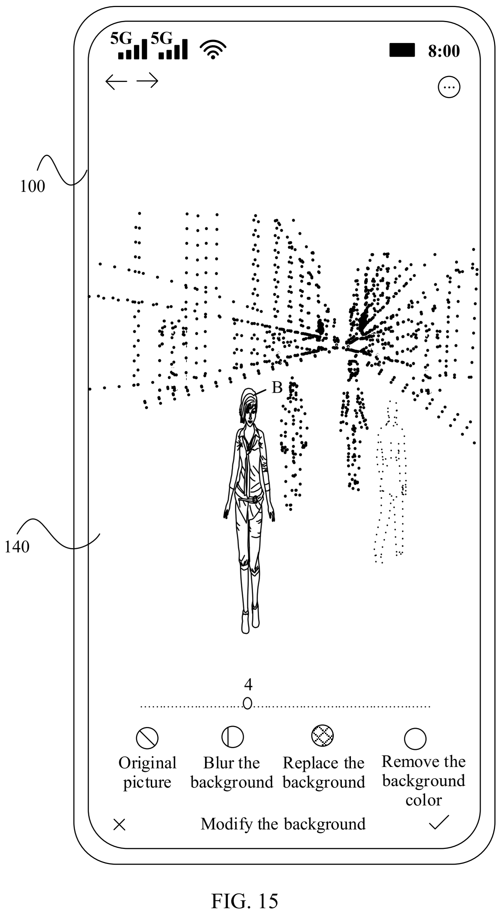

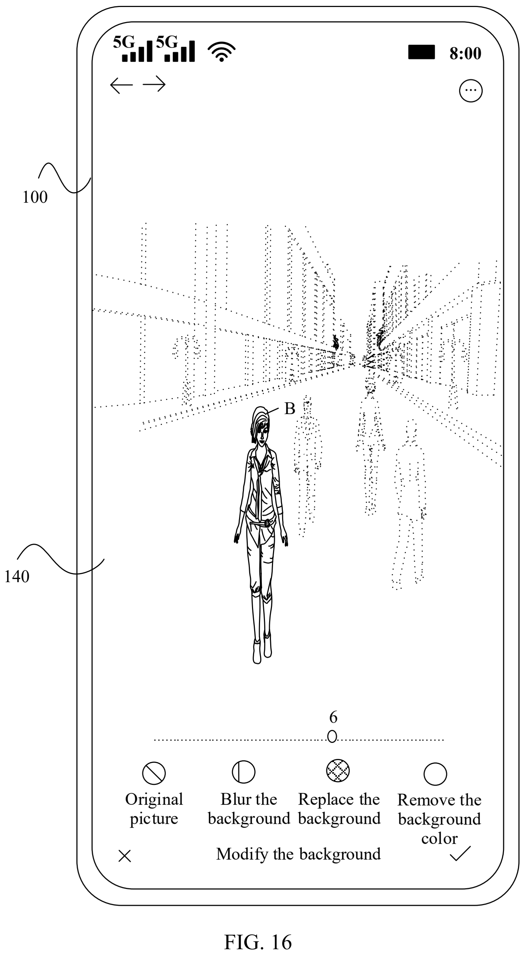

For example, as shown in FIG. 14, the second function item is background blurring 144. When the user taps the background blurring 144, the electronic device blurs an area other than the person B in the first picture based on a parameter of the background blurring 144. For example, a blur degree is displayed on the interface 140 shown in FIG. 15. When the user selects the blur degree as 4, the electronic device blurs the area other than the person B in the first picture based on the blur degree, to obtain a blurred first picture shown in FIG. 15. When the user selects the blur degree as 6, the electronic device blurs the area other than the person B in the first picture based on the blur degree, to obtain a blurred first picture shown in FIG. 16. In another example, the electronic device may blur the area other than the person B in the first picture based on a spatial relationship.

For example, as shown in FIG. 14, the second function item is background replacement 145. When the user taps the background replacement 145, the electronic device performs background replacement on the area other than the person B in the first picture based on a parameter of the background replacement 145. For example, when the user taps the background replacement 144, the electronic device may jump to a gallery interface, and select a to-be-replaced picture on the interface. In this case, the electronic device pastes an area in which the person B is located on the selected picture. For another example, when the user taps the background replacement 145, the electronic device may display, on the interface 140, a background image excluding the area in which the person B is located, and the user may select the background image. It should be noted that, to ensure that a replaced background does not have a sense of contravention with the first object, the electronic device may recommend a to-be-replaced background image based on image information of the first object (for example, image information such as brightness and a color of the first object).

For example, as shown in FIG. 14, the second function item is background color removal 146. When the user taps the background color removal 146, the electronic device changes the area other than the person B in the first picture to gray based on a parameter of the background color removal 146.

### Scenario 4: Scenario of cropping an object in a picture

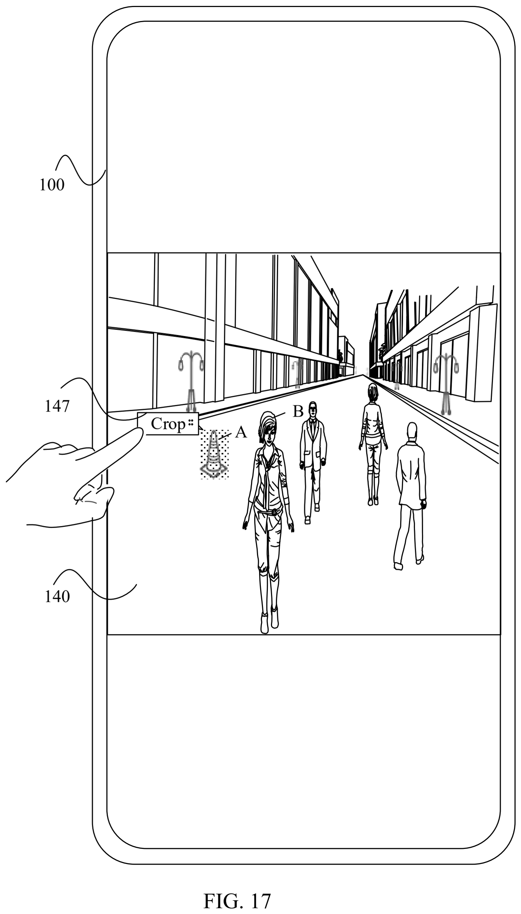

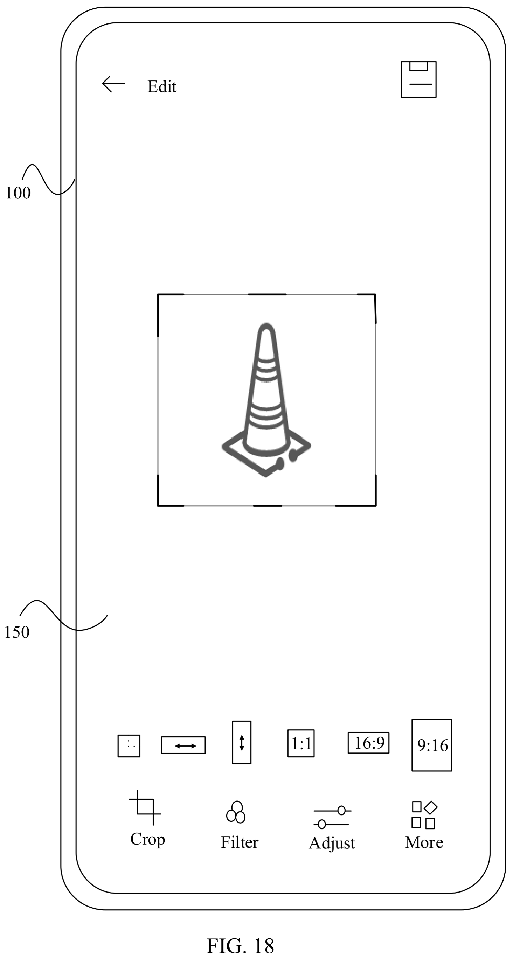

In a specific implementation, as shown in FIG. 17, the first object is a thing, and the editing menu includes cropping. In this case, S406 may be specifically implemented as follows: S4065: In response to a tap operation on a cropping menu corresponding to the thing, the electronic device crops the thing onto an interface 5, where the interface 5 is an editing interface of the cropping menu. For example, as shown in FIG. 17, the electronic device receives a tap operation of the user on the editing menu (namely, cropping) 147 of the thing A. In response to the operation, the electronic device crops the traffic cone A shown in FIG. 17, and displays the traffic cone on an interface 150 shown in FIG. 18. The interface includes third function items such as cropping, filtering, and adjustment. S4066: In response to an operation on the third function item, the electronic device performs a cropping operation on the thing based on a parameter of the function item, to obtain a second picture. S4067: The electronic device identifies image information in the second picture. When the image information does not satisfy a preset condition, the electronic device corrects the image information. Specifically, the electronic device may adjust image information of the traffic cone A based on a perspective relationship between the traffic cone A and the first picture.

For example, if a blurred image or a blurred number exists in the second picture, the electronic device may identify the image information of the picture, and determine that the image information is blurred information. The electronic device corrects the image information. For example, if a blurred font exists in the second picture, the electronic device identifies the font in the second picture, and covers a clear font in an area in which the original font is located.

### Scenario 5: Scenario of turning the sky into blue

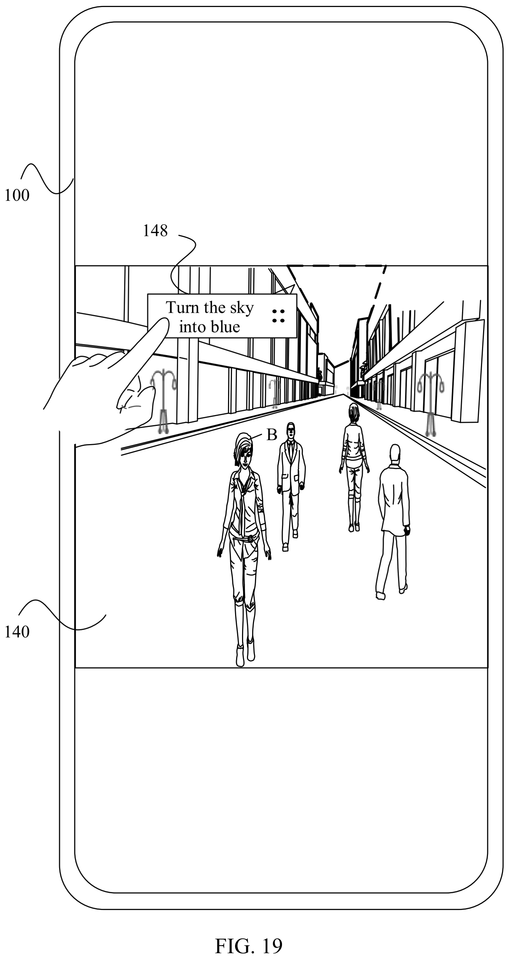

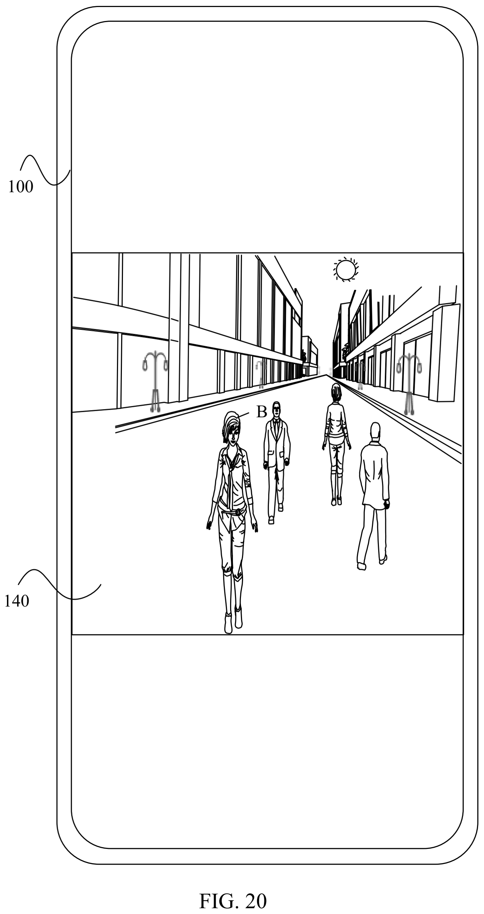

In a specific implementation, as shown in FIG. 19, the first object is the sky, and the editing menu includes turning the sky into blue. In this case, S406 may be specifically implemented as follows: S4068: In response to a tap operation on the menu for turning the sky into blue, the electronic device edits a sky area in the picture based on image information of the object in the picture and a parameter of the function item, to obtain a second picture. The image information of the object may include information such as brightness, a color, and a relative position of the object relative to a light source. For example, as shown in FIG. 19, when the user taps a menu 148 for turning the sky into blue, the electronic device may edit the sky area in the picture based on information such as brightness and a color of the person B shown in FIG. 19 and a relative position of the person B relative to the light source, to obtain a picture with the sun and the blue sky shown in FIG. 20.

### Scenario 6: a high-definition repair scenario

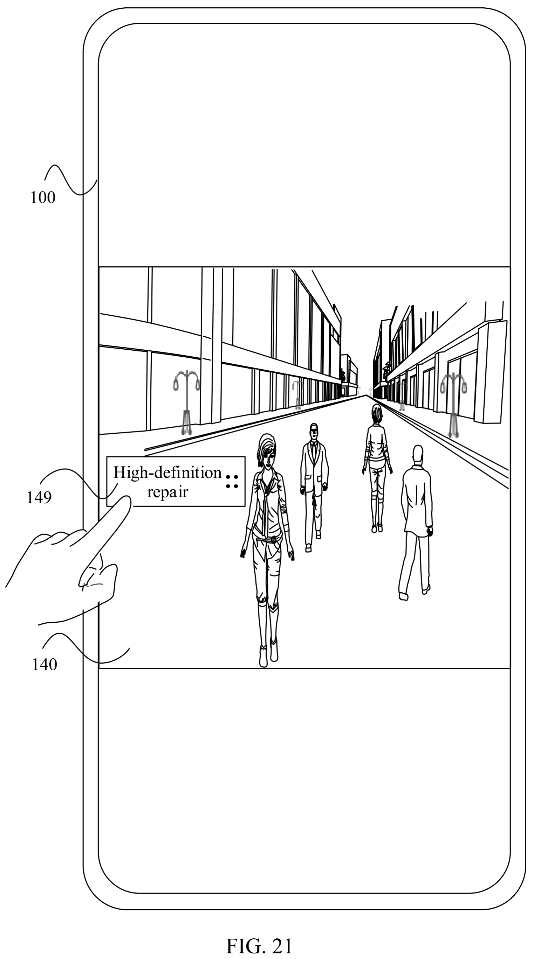

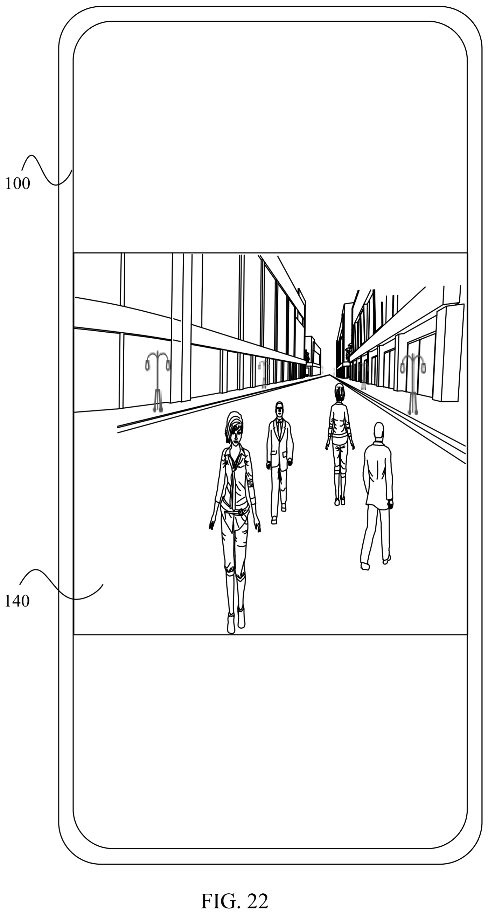

In a specific implementation, as shown in FIG. 21, the first object is a thing and/or a person, and the editing menu includes high-definition repair. In this case, S406 may be specifically implemented as follows: S4069: In response to a tap operation on the high-definition repair menu, the electronic device identifies image information of each object in the picture through an artificial intelligence deep learning model, and performs high-definition repair on each object, to obtain a second picture. For example, as shown in FIG. 21, when the user taps a high-definition repair menu 149, the electronic device may input a picture shown in FIG. 21 into the artificial intelligence deep learning model, and output a picture shown in FIG. 22. The artificial intelligence deep learning model is used to identify a blurred image, and perform high-definition repair on a detail feature in the image.

### Scenario 7: an AI retouching scenario

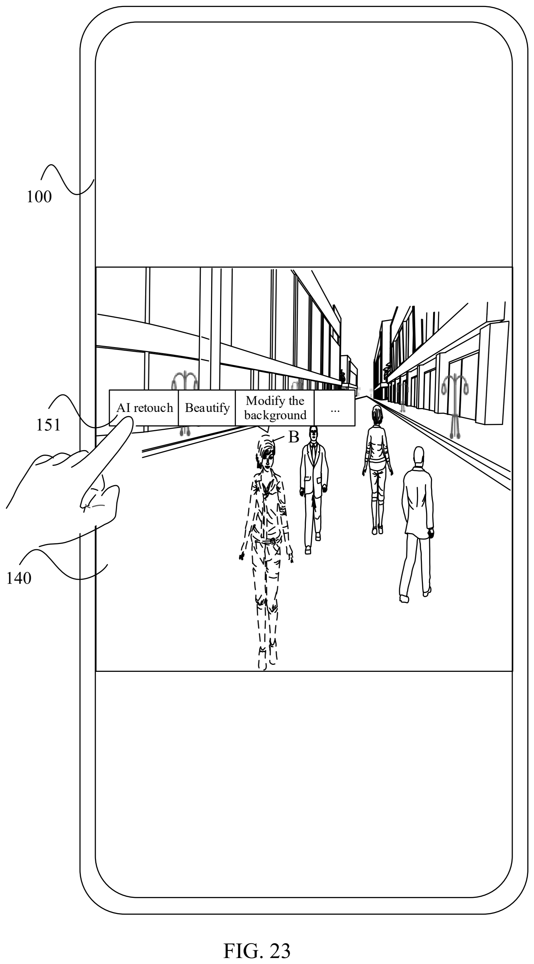

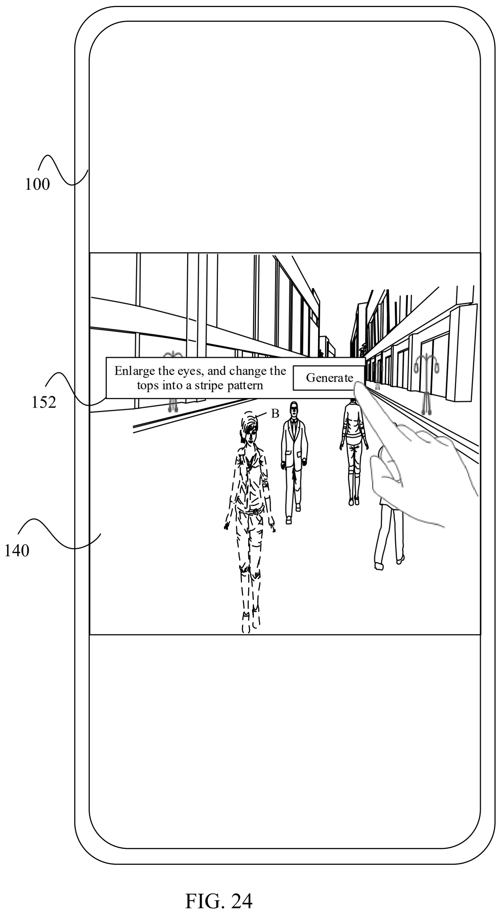

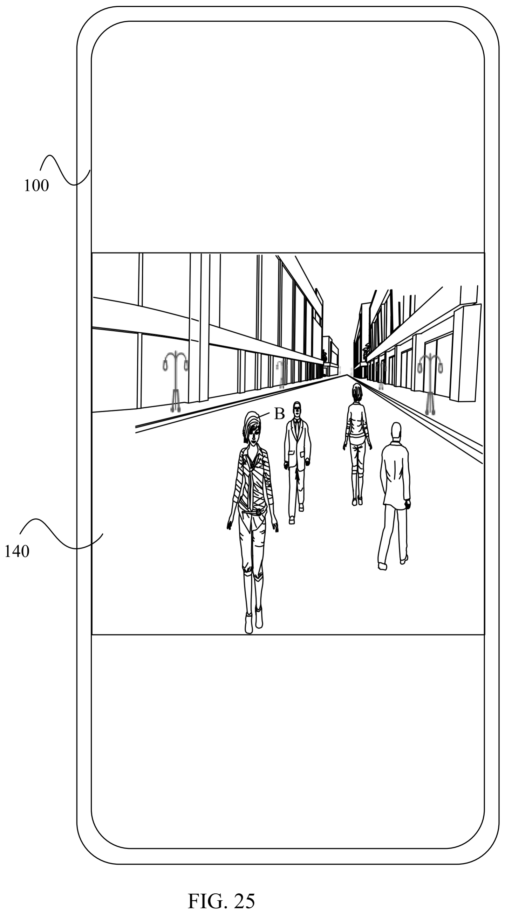

In a specific implementation, as shown in FIG. 23, the editing menu includes AI retouching. In this case, S406 may be specifically implemented as follows: S4070: In response to a tap operation on AI retouching corresponding to the first object, the electronic device displays a first input box, where the first input box is an input box of the first object. For example, as shown in FIG. 23, the first object is the person B, and the electronic device receives a tap operation of the user on the editing menu (namely, AI retouching) 151 of the person B. In response to the operation, the electronic device displays a first input box 152 shown in FIG. 24. S4071: When the user enters the editing content of the first object in the first input box, the electronic device edits the first object based on the editing content. For example, as shown in FIG. 24, when the user enters editing content "Enlarge the eyes, and change the top into a stripe pattern" in the first input box 152, the electronic device enlarges the eyes of the person B and changes the tops of the person B into the stripe pattern based on the descriptions. In this case, the electronic device obtains an edited picture shown in FIG. 25. Certainly, in embodiments of this application, the editing content may be arbitrary, and is not limited to the foregoing example. For example, the editing content may alternatively be "Turn the tops of the person B into red". In addition, the user may implement entering in the first input box through speech recognition, text entering, or the like. A manner of implementing entering in the first input box is not limited in this application.

In another specific implementation, in comparison with the foregoing descriptions, a difference lies in S4072: When the user enters the editing content of the first object in the first input box, the electronic device reports the editing content to the server, where the server edits the first object based on the editing content, and returns the edited object information. S4073: The electronic device displays an edited first object based on the edited object information. Specifically, the electronic device displays the edited first object in a preset display mode based on the edited object information. The preset display mode may include gradient displaying, progressive displaying, flip displaying, blinking displaying, and the like. During specific implementation, a setting needs to be based on an actual requirement. This is not specifically limited in embodiments of this application. In this embodiment of this application, the electronic device displays the edited first object in the preset display mode, so that dynamic picture retouching effect can be implemented, and the user can feel a change before and after the picture retouching. This improves visual experience of the user.

Certainly, embodiments of this application are not limited to the foregoing scenarios, and may further include another scenario, for example, a downsizing scenario or a makeup scenario. Examples are not listed one by one in embodiments of this application.

Unless otherwise stated or there is a logic conflict, terms and/or descriptions in various embodiments of this application are consistent and may be mutually referenced, and technical features in different embodiments may be combined based on an internal logical relationship thereof, to form a new embodiment.

The foregoing describes in detail the picture editing method provided in embodiments of this application with reference to FIG. 4 to FIG. 25. The following describes in detail an electronic device provided in embodiments of this application with reference to FIG. 1 to FIG. 4. It should be understood that descriptions of apparatus embodiments correspond to the descriptions of the method embodiments. Therefore, for content that is not described in detail, refer to the method embodiments. For brevity, details are not described herein again.

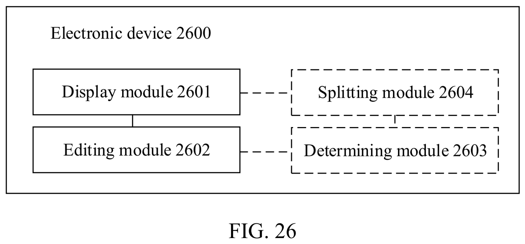

FIG. 26 is a block diagram of an electronic device 2600 according to an embodiment of this application. The electronic device 2600 includes a display module 2601 and an editing module 2602.

The display module 2601 is configured to display a first picture, where the first picture includes a first object. For example, the display module 2601 may perform steps S400 to S402. The display module 2601 may be the processor 110 and the display 180 shown in FIG. 1.

The display module 2601 is configured to display an editing menu of the first object based on information about the first object. For example, the display module 2601 may perform step S405. The display module 2601 may be the processor 110 and the display 180 shown in FIG. 1.

The editing module 2602 is configured to edit the first object in response to a second operation on the editing menu. For example, the editing module 2602 may perform step S406. The editing module 2602 may be the processor 110 shown in FIG. 1.

In this embodiment of this application, the electronic device recommends an editing menu of an object in a picture based on information about the object. When the user operates the editing menu, the electronic device edits the first object based on the function in the editing menu. In this way, the electronic device can separately edit each object in the picture, so that personalized editing can be performed on each object, to satisfy the personalized requirement for each object, and implement high practicability.

In some embodiments, the electronic device 2600 further includes a determining module 2603. The determining module 2603 is configured to determine the editing menu of the first object based on the information about the first object, each information priority, and a correspondence between information and an editing function item, where the editing menu includes at least one editing function item. For example, the determining module 2603 may perform step S405. The determining module 2603 may be the processor 110 shown in FIG. 1.

In this embodiment of this application, the electronic device specifically recommends an editing menu of an object in the picture based on information about the object, so that each object corresponds to a separate editing menu. When the user operates the editing menu, the electronic device edits the first object based on the function in the editing menu. In this way, the electronic device can separately edit each object in the picture, so that personalized editing can be performed on each object, to satisfy the personalized requirement for each object, and implement high practicability.

In an embodiment, the determining module 2603 is configured to determine the editing menu of the first object based on the information about the first object and historical behavior information of a user.

In this embodiment of this application, the electronic device specifically recommends the editing menu of the object with reference to the historical behavior information of the user and the information about the object, and may recommend an editing menu with reference to a preference of the user. When the user operates the editing menu, the electronic device edits the first object based on the function in the editing menu, so that preferences and aesthetics of different users can be satisfied, convenience is provided for the user to edit the object, and user experience is improved.

In an embodiment, the display module 2601 is configured to display the editing menu of the first object in response to receiving an operation on the first object.

In an embodiment, the display module 2601 is configured to display the first object through marking in response to receiving the operation on the first object. A representation of the displaying through marking may include: displaying by using dotted lines, displaying in red, displaying through lightening, displaying through blurring, and the like. Certainly, the displaying through highlighting is not limited to the foregoing examples. In this way, the electronic device displays the object in the picture through highlighting, so that the user can select the object and edit the object, to provide convenience for the user to edit the object subsequently.

In an embodiment, the editing menu of the first object includes at least one of the following: deletion, beautification, background modification, and AI retouching.

In an embodiment, the first picture further includes a second object, and the determining module 2603 is configured to determine, based on the information about the first object and information about the second object, that the first object is a primary object in the first picture and the second object is a secondary object in the first picture, or that both the first object and the second object are primary objects in the first picture.

In an embodiment, the display module 2601 is configured to: when both the first object and the second object are primary objects in the first picture, display the editing menu of the first object and first prompt information of the second object, where the first prompt information is used to prompt the user whether to edit the second object.

In an embodiment, the display module 2601 is configured to: when the second object is a secondary object in the first picture, an editing menu of the second object includes deletion.

In this embodiment of this application, the electronic device may determine primary and secondary attributes of objects in the picture and obtain primary objects and secondary objects through screening. Then, the electronic device may uniformly recommend an editing menu for the primary objects, or may separately recommend editing menus for the primary objects, or may recommend a menu for one primary object, and display prompt information used to prompt the user whether to edit another primary object. The electronic device may recommend an editing menu of deletion for the secondary object. In this way, the electronic device may selectively recommend a menu, so that an image editing operation has a primary/secondary attribute, and the image editing operation is simpler.

In an embodiment, the editing menu of the first object includes the AI retouching, and the editing module 2602 is configured to: display a first input box in response to an operation on the AI retouching, where the first input box is an input box of editing content of the first object; receive the editing content that is of the first object and that is entered by the user in the first input box; and edit the first object based on the editing content. A format of the editing content may be a text format or an audio format. This is not specifically limited in this application. In this way, the electronic device can implement automatic picture retouching through AI retouching, to simplify a picture retouching operation, and make picture retouching more convenient and quicker.

In an embodiment, the editing module 2602 is configured to: report the editing content and the information about the first object to another device, where the another device edits the first object based on the editing content, and returns edited object information; and display an edited first object based on the edited object information. The another device may include a server, a cloud platform, or the like. In this way, the electronic device reports the editing content and the information about the first object to the another device, and the another device edits the first object, to reduce a calculation amount of the electronic device and save resources of the electronic device.

In an embodiment, the display module 2601 is configured to display the edited first object in a preset display mode based on the edited object information. The preset display mode may include gradient displaying, progressive displaying, flip displaying, blinking displaying, and the like, and needs to be set based on an actual requirement during specific implementation. In this way, the electronic device displays the edited first object in the preset display mode, so that dynamic picture retouching effect can be implemented, and the user can feel a change before and after the picture retouching. This improves visual experience of the user.

In some embodiments, the electronic device 2600 further includes a splitting module 2604, where the splitting module is configured to split the first object away from the first picture. For example, the splitting module 2604 may perform step S404. The splitting module 2604 may be the processor 110 shown in FIG. 1.

In this embodiment of this application, the electronic device may split the object away from the picture. The electronic device recommends the editing menu of the object based on the information about the object. When the user operates the editing menu, the electronic device edits the first object based on the function in the editing menu. In this way, the electronic device can edit the object by splitting the object away from the picture, so that each object in the picture can be separately edited. Then, the electronic device recommends the editing menu of the object based on the information about the object, so that personalized editing can be performed on each object, to satisfy the personalized requirement for each object, and implement high practicability.

In an embodiment, the splitting module 2604 is configured to split the first object away from the first picture based on association of an image feature of the first object in the first picture.

In an embodiment, the splitting module 2604 is configured to split the first object away from the first picture in response to an operation on the first object.

It should be noted that all related content of the steps in the foregoing method embodiments may be cited in function descriptions of corresponding functional modules. Details are not described herein again.

An embodiment of this application further provides a computer-readable storage medium, including instructions. When the instructions are run on a computer, the computer is enabled to perform any one of the foregoing methods.

An embodiment of this application further provides a computer program product including instructions. When the computer program product runs on a computer, the computer is enabled to perform any one of the foregoing methods.

An embodiment of this application further provides a chip. The chip includes a processor and an interface circuit. The interface circuit is coupled to the processor. The processor is configured to run a computer program or instructions, to implement the foregoing method. The interface circuit is configured to communicate with a module other than the chip.

All or some of any features or any steps in embodiments of this application may be freely combined. A combined technical solution also falls within the scope of this application.

In descriptions of this application, unless otherwise specified, "/" means "or". For example, A/B may indicate A or B. "And/or" in this specification describes only an association relationship between associated objects and indicates that there may be three relationships. For example, A and/or B may indicate the following three cases: Only A exists, both A and B exist, and only B exists. In addition, "at least one" means one or more, and "a plurality of" means two or more. Words such as "first" and "second" do not limit a quantity or an execution sequence, and the words such as "first" and "second" do not indicate a definite difference.

In descriptions of this application, words such as "example" or "for example" are used to give an example, an illustration, or a description. Any embodiment or design scheme described as "example" or "for example" in embodiments of this application should not be explained as being more preferred or having more advantages than another embodiment or design scheme. Exactly, use of the word "example", "for example", or the like is intended to present a related concept in a specific manner.

The foregoing descriptions about implementations allow a person skilled in the art to clearly understand that, for the purpose of convenient and brief description, division of the functional modules is used as an example for illustration. In actual application, the functions can be allocated to different modules and completed based on a requirement, that is, an inner structure of an apparatus is divided into different functional modules to complete all or some of the functions described above.

In the several embodiments provided in this application, it should be understood that the disclosed apparatuses and methods may be implemented in another manner. For example, the described apparatus embodiment is merely an example. For example, the module or unit division is merely logical function division and may be other division in an actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate components may or may not be physically separate, and components displayed as units may be one or more physical units, may be located in one place, or may be distributed on a plurality of different places. Some or all of the units may be selected based on an actual requirement to achieve an objective of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip or the like) or a processor (processor) to perform all or some of the steps of the methods described in embodiments of this application. The storage medium includes various media that can store program code, such as a USB flash drive, a removable hard disk, a read-only memory (read-only memory, ROM), a random access memory (random access memory, RAM), a magnetic disk, or an optical disc.

The foregoing content is merely specific implementations of this application, but is not intended to limit the protection scope of embodiments of this application. Any variation or replacement within the technical scope disclosed in embodiments of this application shall fall within the protection scope of embodiments of this application. Therefore, the protection scope of this application shall be subject to the protection scope of the claims.

## Claims

1. A picture editing method, wherein the method comprises:
displaying a first picture, wherein the first picture comprises a first object;
displaying an editing menu of the first object based on information about the first object; and
editing the first object in response to an operation on the editing menu.

2. The method according to claim 1, wherein before displaying the editing menu of the first object, the method comprises:
determining the editing menu of the first object based on the information about the first object, each information priority, and a correspondence between information and an editing function item, wherein the editing menu comprises at least one editing function item.

3. The method according to claim 1 or 2, wherein before displaying the editing menu of the first object, the method further comprises:
determining the editing menu of the first object based on the information about the first object and historical behavior information of a user.

4. The method according to any one of claims 1 to 3, wherein displaying the editing menu of the first object based on the information about the first object comprises:
displaying the editing menu of the first object in response to receiving an operation on the first object.

5. The method according to claim 4, further comprising:
displaying the first object through marking in response to receiving the operation on the first object.

6. The method according to any one of claims 1 to 5, wherein the editing menu of the first object comprises at least one of the following: deletion, beautification, background modification, and AI retouching.

7. The method according to any one of claims 1 to 6, wherein the first picture further comprises a second object, and before displaying the editing menu of the first object based on the information about the first object, the method further comprises:
determining, based on the information about the first object and information about the second object, that the first object is a primary object in the first picture and the second object is a secondary object in the first picture, or that both the first object and the second object are primary objects in the first picture.

8. The method according to claim 7, further comprising:
when both the first object and the second object are primary objects in the first picture, displaying the editing menu of the first object and first prompt information of the second object, wherein the first prompt information is used to prompt the user whether to edit the second object.

9. The method according to claim 7, further comprising:
when the second object is a secondary object in the first picture, an editing menu of the second object comprises deletion.

10. The method according to claim 6, wherein the editing menu of the first object comprises the AI retouching, and editing the first object in response to the operation on the editing menu comprises:
displaying a first input box in response to an operation on the AI retouching, wherein the first input box is an input box of editing content of the first object;
receiving the editing content that is of the first object and that is entered by the user in the first input box; and
editing the first object based on the editing content.

11. The method according to claim 10, wherein editing the first object based on the editing content comprises:
reporting the editing content and the information about the first object to another device, wherein the another device edits the first object based on the editing content, and returns edited object information; and
displaying an edited first object based on the edited object information.

12. The method according to claim 11, wherein displaying the edited first object based on the edited object information comprises:
displaying the edited first object in a preset display mode based on the edited object information.

13. An electronic device, wherein the electronic device comprises a display module and an editing module, wherein
the display module is configured to display a first picture, wherein the first picture comprises a first object;
the display module is configured to display an editing menu of the first object based on information about the first object; and
the editing module is configured to edit the first object in response to an operation on the editing menu.

14. The electronic device according to claim 13, further comprising a determining module, wherein
the determining module is configured to determine the editing menu of the first object based on the information about the first object, each information priority, and a correspondence between information and an editing function item, wherein the editing menu comprises at least one editing function item.

15. The electronic device according to claim 14, wherein the determining module is configured to:
determine the editing menu of the first object based on the information about the first object and historical behavior information of a user.

16. The electronic device according to any one of claims 13 to 15, wherein the display module is configured to:
display the editing menu of the first object in response to receiving an operation on the first object.

17. The electronic device according to claim 16, wherein the display module is configured to:
display the first object through marking in response to receiving the operation on the first object.

18. The electronic device according to any one of claims 13 to 17, wherein the editing menu of the first object comprises at least one of the following: deletion, beautification, background modification, and AI retouching.

19. The electronic device according to any one of claims 14 to 18, wherein the first picture further comprises a second object, and the determining module is configured to:
determine, based on the information about the first object and information about the second object, that the first object is a primary object in the first picture and the second object is a secondary object in the first picture, or that both the first object and the second object are primary objects in the first picture.

20. The electronic device according to claim 19, wherein the display module is configured to:
when both the first object and the second object are primary objects in the first picture, display the editing menu of the first object and first prompt information of the second object, wherein the first prompt information is used to prompt the user whether to edit the second object.

21. The electronic device according to claim 19, wherein the display module is configured to:
when the second object is a secondary object in the first picture, an editing menu of the second object comprises deletion.

22. The electronic device according to claim 18, wherein the editing menu of the first object comprises the AI retouching, and the editing module is configured to:
display a first input box in response to an operation on the AI retouching, wherein the first input box is an input box of editing content of the first object;
receive the editing content that is of the first object and that is entered by the user in the first input box; and
edit the first object based on the editing content.

23. The electronic device according to claim 22, wherein the editing module is configured to:
report the editing content and the information about the first object to another device, wherein the another device edits the first object based on the editing content, and returns edited object information; and
display an edited first object based on the edited object information.

24. The electronic device according to claim 23, wherein the display module is configured to:
display the edited first object in a preset display mode based on the edited object information.

25. An electronic device, wherein the electronic device comprises one or more processors and a memory, the memory stores code, and when the code is executed by the processor, the electronic device is enabled to perform the method according to any one of claims 1 to 12.

26. A computer-readable storage medium, comprising computer instructions, wherein when the computer instructions are run on an electronic device, the electronic device is enabled to perform the method according to any one of claims 1 to 12.
